# EUROPEAN PATENT SPECIFICATION

(11) **EP 4 173 323 B1**
(45) Date of publication and mention of the grant of the patent: **03.06.2026**
(21) Application number: 21737380.2
(22) Date of filing: 24.06.2021
(51) Int. Cl.: H04W 4/40, H04W 76/00, H04W 76/14, H04W 76/16, H04W 76/19, H04W 76/20, H04W 76/34

(54) **CONFIGURATION OF RADIO CONNECTIONS IN A MULTI-RAT NETWORK**
KONFIGURATION VON FUNKVERBINDUNGEN IN EINEM MULTI-RAT-NETZWERK
CONFIGURATION DE CONNEXIONS RADIO DANS UN RÉSEAU À RAT MULTIPLES

(30) Priority: 26.06.2020 WO PCT/EP2020/068153
(43) Date of publication of application: 03.05.2023
(73) Proprietor: Telefonaktiebolaget LM ERICSSON (PUBL), 16483 Stockholm (SE)
(72) Inventor: ORSINO, Antonino, 02480 Kirkkonummi (FI)
(74) Representative: Ericsson
(86) International application number: PCT/EP2021/067415
(87) International publication number: WO 2021/260146

(56) References cited:
- EP-A1- 3 589 069
- EP-A1- 3 737 198
- EP-A1- 3 758 433
- ERICSSON: "On the status of NR V2X WI", vol. TSG RAN, no. Electronic Meeting; 20200629 - 20200703, 22 June 2020 (2020-06-22), XP051903574, Retrieved from the Internet <URL:https://ftp.3gpp.org/tsg_ran/TSG_RAN/TSGR_88e/Docs/RP-200876.zip RP-200876 - On the status of NR V2X WI.docx> [retrieved on 20200622]
- "3rd Generation Partnership Project; Technical Specification Group Radio Access Network; NR; Radio Resource Control (RRC) protocol specification (Release 16)", 3 April 2020 (2020-04-03), XP051868436, Retrieved from the Internet <URL:https://ftp.3gpp.org/tsg_ran/WG2_RL2/Specifications/202003_draft_specs_after_RAN_87/Draft_38331-g00_v2.docx> [retrieved on 20200403]
- ERICSSON: "Sending of RRC reconfiguration complete message in SL crossRAT", vol. RAN WG2, no. Electronic Meeting; 20200817 - 20200828, 6 August 2020 (2020-08-06), XP051910968, Retrieved from the Internet <URL:https://ftp.3gpp.org/tsg_ran/WG2_RL2/TSGR2_111-e/Docs/R2-2007285.zip R2-2007285- Sending of RRC reconfiguration complete message in SL crossRAT.docx> [retrieved on 20200806]
- ERICSSON: "Sending of RRC reconfiguration complete message in SL crossRAT", vol. RAN WG2, no. Electronic Meeting; 20200817 - 20200828, 6 August 2020 (2020-08-06), XP051910967, Retrieved from the Internet <URL:https://ftp.3gpp.org/tsg_ran/WG2_RL2/TSGR2_111-e/Docs/R2-2007284.zip 38.331_CR1828(Rel-16)_R2-2007284- Sending of RRC reconfiguration complete message in SL crossRAT.docx> [retrieved on 20200806]
- HUAWEI ET AL: "Clarification on RRC signaling/procedure for acknowledging cross- RAT SL configuration in current RRC Spec - Inexistence of "Issue 1" discussed by RAN plenary", vol. RAN WG2, no. electronic; 20200817 - 20200828, 7 August 2020 (2020-08-07), XP051912411, Retrieved from the Internet <URL:https://ftp.3gpp.org/tsg_ran/WG2_RL2/TSGR2_111-e/Docs/R2-2007786.zip R2-2007786 Clarification on RRC signaling&procedure for acknowledging cross-RAT SL config in the current Spec - Inexistence of RAN-discussed Â Â°Issue 1Â Â .docx> [retrieved on 20200807]

## Description

### FIELD OF THE INVENTION

The present disclosure generally relates to wireless communication, and more specifically, to method and apparatus for configuration of radio connections in a multi-radio access technology (RAT) network.

### BACKGROUND

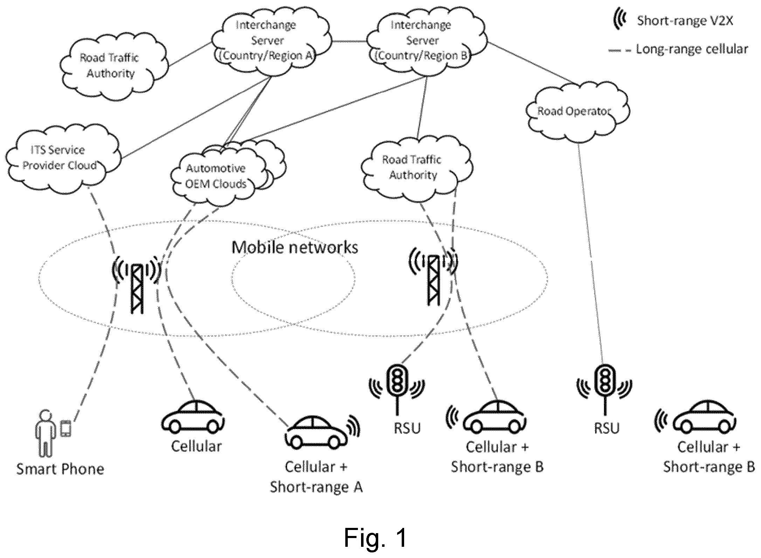

Cellular Intelligent Transport Systems (ITS) aims at defining a new cellular eco-system for the delivery of vehicular services and their dissemination. Such eco-system includes both short-range and long-range vehicle-to-anything (V2X) service transmissions, as depicted in Figure 1. In particular, short-range communication involves transmissions over the Device-to-Device (D2D) link, also defined as sidelink or PC5 interface in the 3^{rd} Generation Partnership Project (3GPP), towards other vehicular user equipments (UEs) or roadside units (RSUs). Long-range transmission utilizes transmission over the Uu interface between a UE and a base station, from which data packets may be disseminated to different ITS service providers, such as road traffic authorities, road operators, automotive original equipment manufacturers (OEMs), cellular operators, etc.

When it comes to the sidelink interface, the first standardization effort in 3GPP dates to Rel.12, targeting public safety use cases. Since then, a number of enhancements have been introduced with the objective of enlarging the use cases that could benefit from D2D technology. Particularly, in Long Term Evolution (LTE) Rel-14 and Rel-15, the extensions for D2D consisted of supporting V2X communication, including any combination of direct communication between vehicles (V2V), pedestrians (V2P) and infrastructure (V2I).

In RAN#80, a new Study Item named "Study on New Radio (NR) V2X" was approved to study enhancements to support advanced V2X services beyond those supported in Long Term Evolution (LTE) Rel-15. One of the objectives for NR V2X design is to study technical solutions for Quality of Service (QoS) management of the radio interface including both Uu (i.e. network-to-vehicle UE communication) and sidelink (i.e. vehicle UE-to-vehicle UE communication) used for V2X operations.

While LTE V2X mainly aims at traffic safety services, NR V2X has a much broader scope including not only basic safety services, but also non-safety applications, such as extended sensor/data sharing between vehicles, with the objective to strengthen the perception of the surrounding environment of vehicles. Hence, a new set of applications have been captured in TR 22.886 v16.2.0, such as advanced driving, vehicle platooning, cooperative maneuvering between vehicles and remote driving that would require enhanced NR system and new NR sidelink framework.

In this new context, the expected requirements to meet the needed data rate, capacity, reliability, latency, communication range and speed are more stringent. What is more, both communication interfaces, PC5 and Uu, could be used to support the advanced V2X use cases, taking into account radio conditions and the environment where the enhanced V2X (eV2X) scenario takes place. For example, given the variety of services that can be transmitted over the sidelink, a robust QoS framework which takes into account the different performance requirements of the different V2X services seems to be needed. Additionally, new radio protocols to handle more robust and reliable communication should be designed. All of these issues are currently under the investigation of 3GPP in NR Rel-16.

In NR, a sidelink (SL) QoS flow model is adopted. At the non-access stratum (NAS) layer, the UE maps one V2X packet to the corresponding SL QoS flow and then maps the QoS flow to a SL radio bearer at the Service Data Adaptation Protocol (SDAP) layer.

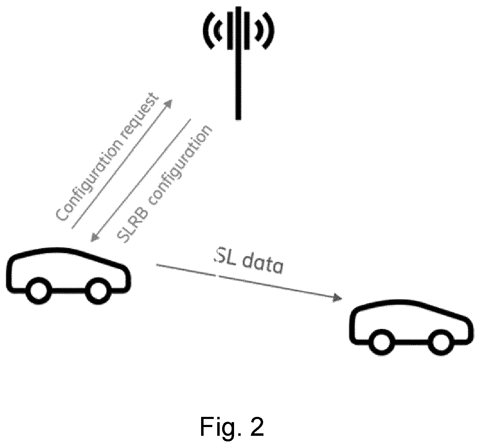

In NR, SL radio bearer (SLRB) configuration, including the QoS flow to SLRB mapping, is either preconfigured or configured by the network (NW) when the UE is in coverage. For instance, as shown in Figure 2, when a UE wants to establish a new SL QoS flow/SLRB for a new service, it can send a request to the associated 5G Node B (gNB). The request can include the QoS information of the service. The gNB then determines an appropriate SLRB configuration to support such SL QoS flow. After receiving the SLRB configuration from the gNB, the UE establishes the local SLRB accordingly and prepares for data transmission over the SL. Note that to enable successful reception at the receiving (RX) UE side, the transmitting (TX) UE might have to inform the RX UE of necessary parameters, e.g. sequence number space for Packet Data Convergence Protocol (PDCP) or Radio Link Control (RLC), before the data transmission starts.

The crossRAT (Radio Access Technology) sidelink feature refers to the case where an eNB (i.e., an LTE or 4G base station) can control/configure an NR SL UE (i.e., a 5G UE) and when a gNB (a 5G base station) can control/configure an LTE V2X UE (a 4G UE). This feature was standardized in Rel-16 and it works by using Radio Resource Control (RRC) containers to embed RRC messages generated to/from a device or node using a different RAT. According to the current specification in TS 38.331 v16.0.0, the following signaling is used by a gNB to configure an LTE V2X UE. Similar principles apply for the case where an eNB wants to control/configure a NR SL UE, and these are described in TS 36.331, v 16.0.0.

From section 5.3.5.3 of TS 38.331 we have the following regarding how LTE V2X UEs are configured:
1> if the *RRCReconfiguration* message includes the *sl-ConfigDedicatedEUTRA:*
   2> if *sl-V2X-ConfigDedicated* is included in *sl-ConfigDedicatedEUTRA*
      3> perform the V2X sidelink communication dedicated configuration procedure as specified in 5.3.10.15a in TS 36.331 [10];
   2> if *sl-V2X-SPS-Config* is included in *sl-ConfigDedicatedEUTRA*
      3> perform V2X sidelink SPS reconfiguration as specified in 5.3.10.5 in TS 36.331 [10];

The corresponding ASN.1 is as follows:
- RRCReconfiguration

The *RRCReconfiguration* message is the command to modify an RRC connection. It may convey information for measurement configuration, mobility control, radio resource configuration (including RBs, MAC main configuration and physical channel configuration) and AS security configuration.
Signalling radio bearer: SRB1 or SRB3
RLC-SAP: AM
Logical channel: DCCH
Direction: Network to UE

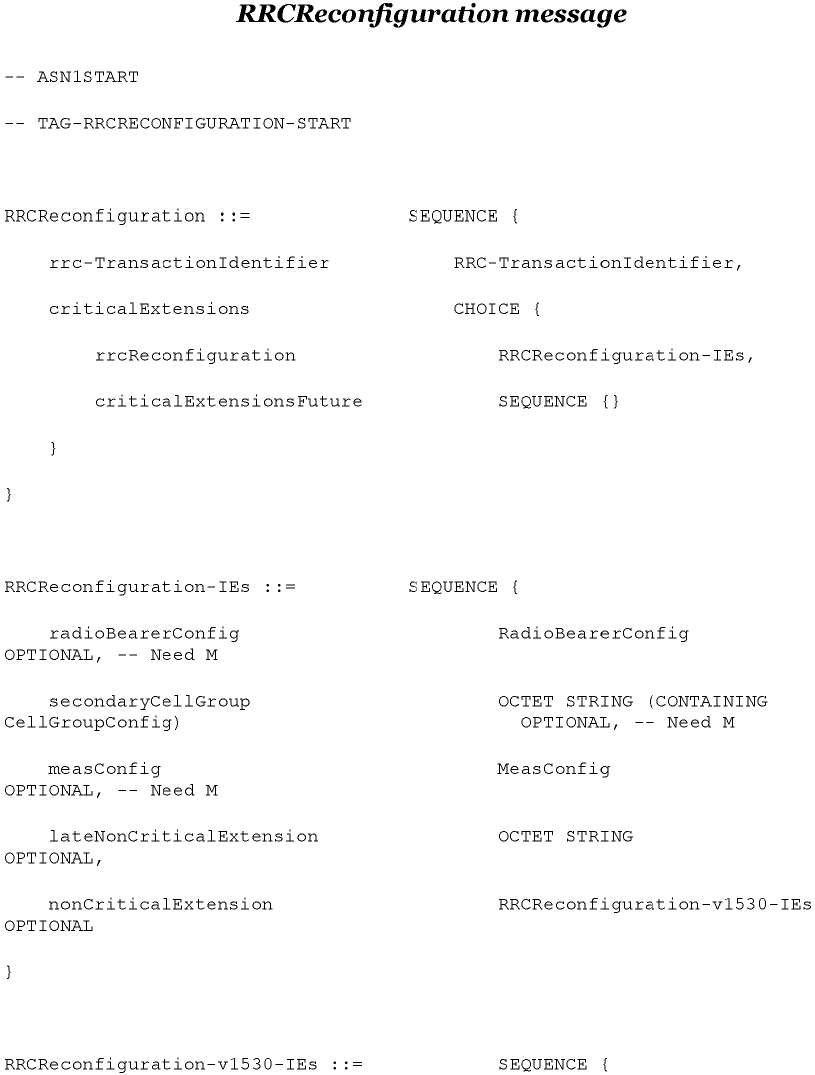

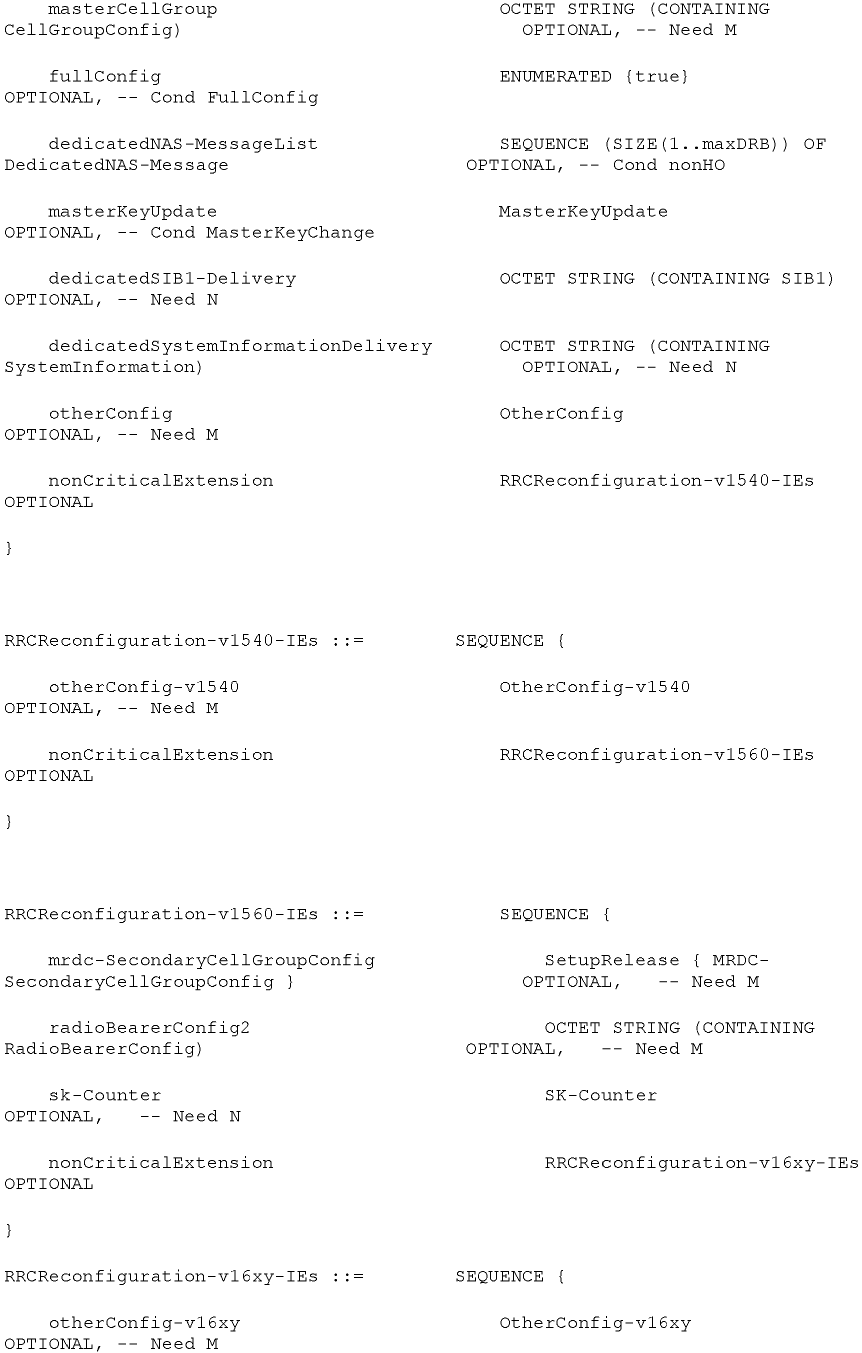

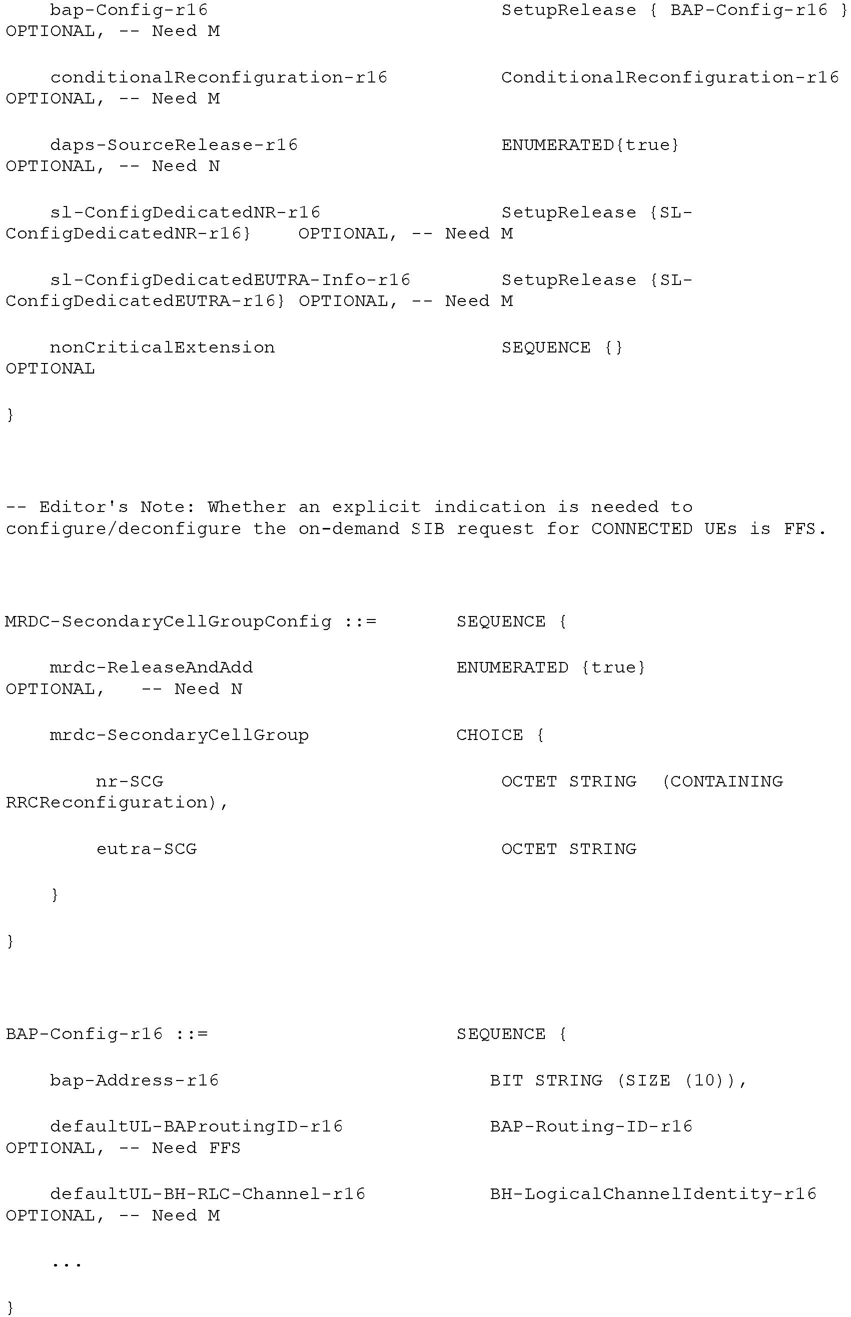

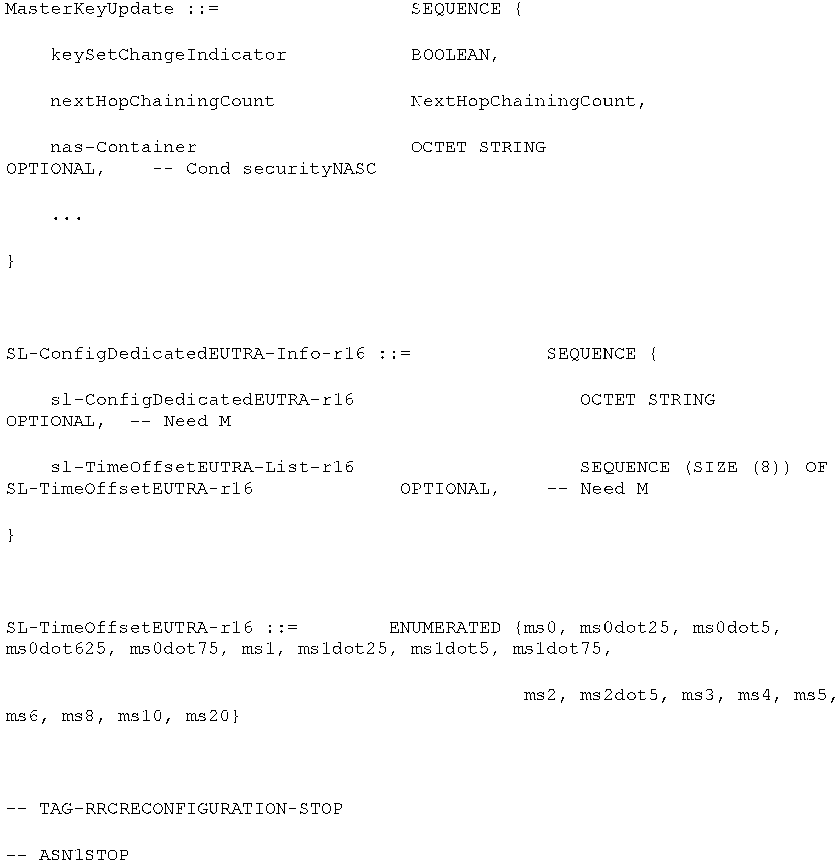

| ***RRCReconfiguration-IEs* field descriptions** |
|---|
| ***sl-ConfigDedicatedEUTRA*** |
| This field includes the E-UTRA *RRCConnectionReconfiguration* as specified in TS 36.331 [10]. In this version of the specification, the E-UTRA *RRCConnectionReconfiguration* can only includes sidelink related fields for V2X sidelink communication. |
| ***sl-TimeOffsetEUTRA*** |
| This field indicates the possible time offset to (de)activation of V2X sidelink transmission after receiving DCI format 3_1 used for scheduling V2X sidelink communication. Value *ms0dpt75* corresponds to 0.75ms, *ms1* corresponds to 1ms and so on. The network may configures this field only when *sl-ConfigDedicatedEUTRA* is present. |

EP 3589069 A1 discloses a method for performing a secondary node change procedure. A master node receives a secondary node change request message from the source secondary node, transmits a secondary node addition request message to a target secondary node, receives a secondary node addition request confirm message from the target secondary node, and transmits a secondary node change request confirm message to the source secondary node.

An Ericsson 3GPP submission entitled "On the status of NR V2X WI" (TDoc RP-200876, Electronic Meeting, 29th June - 3rd July 2020) discusses the management and control of cross RAT sidelink.

A 3GPP technical standard (TS 38.331 V16.0.0 (2020-03)) specifies the Radio Resource Control protocol for the radio interface between a UE and NG-RAN.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

In view of the Background description, there currently exist certain challenge(s). According to current signaling, in the case of crossRAT sidelink (e.g., when a gNB wants to control/configure an LTE V2X UE), the UE will receive an E-UTRA RRCConnectionReconfiguration message (with V2X SL related fields) embedded within an NR RRCReconfiguration message. However, there is no signaling support for the UE to send an acknowledgment to the gNB to inform it of the correct reception and decoding of the RRC message received from the gNB. This means that the current procedure for configuring the LTE V2X cannot be completed satisfactorily.

A similar problem occurs when an eNB wants to control/configure an NR V2X UE. The UE will receive an NR RRCConnectionReconfiguration message (with V2X SL related fields) embedded within an Evolved Universal Terrestrial Radio Access Network (E-UTRAN) RRCReconfiguration message. However, there is no signaling support for the UE to send an acknowledgment to the eNB to inform it of the correct reception and decoding of the RRC message.

Certain aspects of the present disclosure and their embodiments may provide solutions to these or other challenges.

For example, some methods disclosed in the present disclosure enable the UE to send an RRC reconfiguration complete message in response to a received RRC reconfiguration message from the gNB for the case when the gNB wants to control/configure a LTE V2X UE. According to this, the following options can be pursued:
1. Upon receiving an E-UTRA RRC connection reconfiguration message embedded within an NR RRC Reconfiguration message, the UE sends an E-UTRA RRC connection reconfiguration complete message embedded within an NR RRC reconfiguration complete message.
2. Upon receiving an E-UTRA RRC connection reconfiguration message embedded within an NR RRC Reconfiguration message, the UE send an indication within the NR RRC reconfiguration complete message to inform the gNB that the V2X-related fields/configuration have been correctly applied.
3. Upon receiving an E-UTRA RRC connection reconfiguration message embedded within an NR RRC Reconfiguration message, the UE simply sends the NR RRC reconfiguration complete message and this implicitly tells the gNB that the V2X-related fields/configuration have been correctly applied.

It is also possible that the received configuration is not correctly applied (e.g., because the RRC Reconfiguration message was not correctly received or decoded, because the information could not be applied, etc). In that case, when the UE is not able to correctly apply the received V2X-related information, the following options can be pursued:
1. If the UE fails to apply the V2X-related fields/configuration, it triggers a failure procedure to inform the gNB by including an indication in a sidelink message e.g., SidelinkUElnformation. Note that the failure procedure does not affect the Uu connectivity between the SL UE and the gNB, if ongoing (for purpose different from sidelink).
2. If the UE fails to apply the V2X-related fields/configuration, it triggers a failure procedure to inform the gNB by including an indication into the NR RRC reconfiguration complete message. Note that the failure procedure does not affect the Uu connectivity between the SL UE and the gNB, if ongoing (for purpose different from sidelink).
3. If the UE fails to apply the V2X-related fields/configuration, no NR RRC reconfiguration message is sent to the gNB and, instead, the RRC re-establishment procedure is triggered. Note that this affects the Uu connectivity between the SL UE and the gNB, if ongoing (for purpose different from sidelink), since the whole Uu connectivity will be dropped.

There are, proposed herein, various embodiments which address one or more of the issues disclosed herein. Aspects of the invention are set out in the independent claims appended hereto. Optional features are set out in the dependent claims.

Certain embodiments may provide one or more of the following technical advantage(s). According to the methods and solutions disclosed, the UE is able to inform the network that the received fields/configuration (e.g., for the crossRAT sidelink feature) have been correctly applied, thus not leaving the network in a state of uncertainty or "limbo", in which the network does not know if the UE has received and applied the fields/configurations.

Further, where the UE fails to apply the received V2X field/configuration for the crossRAT feature, it will be able to report such failure to the network that, thus, can take the necessary action.

### BRIEF DESCRIPTION OF THE DRAWINGS

Figure 1 shows a C-ITS environment;
Figure 2 shows NR SL radio bearer configuration;
Figure 3 is a flowchart of a method in a terminal device according to embodiments of the disclosure;
Figure 4 shows an apparatus according to embodiments of the disclosure;
Figure 5 is a flowchart of a method in a base station according to embodiments of the disclosure;
Figure 6 shows an apparatus according to further embodiments of the disclosure;
Figure 7 shows a wireless system according to embodiments of the disclosure;
Figure 8 shows a user equipment according to embodiments of the disclosure;
Figure 9 shows a virtualization environment according to embodiments of the disclosure;
Figure 10 shows a telecommunication network according to embodiments of the disclosure;
Figure 11 shows a host computer communicating via a base station with a user equipment according to embodiments of the disclosure;
Figures 12 to 15 show methods implemented in a communication system according to embodiments of the disclosure;
Figure 16 is a signalling diagram showing UL transfer of inter-RAT information according to embodiments of the disclosure; and
Figure 17 is a signalling diagram showing transfer of failure information according to embodiments of the disclosure.

### Detailed Description

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

The term "terminal device" refers to any end device that can access a communication network and receive services therefrom. By way of example and not limitation, the terminal device may refer to a mobile terminal, a user equipment (UE), or other suitable devices. The UE may be, for example, a subscriber station, a portable subscriber station, a mobile station (MS) or an access terminal (AT). The terminal device may include, but not limited to, portable computers, image capture terminal devices such as digital cameras, gaming terminal devices, music storage and playback appliances, a mobile phone, a cellular phone, a smart phone, a tablet, a wearable device, a personal digital assistant (PDA), a vehicle, and the like.

As yet another specific example, in an Internet of things (IoT) scenario, a terminal device may also be called an loT device and represent a machine or other device that performs monitoring, sensing and/or measurements etc., and transmits the results of such monitoring, sensing and/or measurements etc. to another terminal device and/or a network equipment. The terminal device may in this case be a machine-to-machine (M2M) device, which may in a 3rd generation partnership project (3GPP) context be referred to as a machine-type communication (MTC) device.

As one particular example, the terminal device may be a UE implementing the 3GPP narrow band Internet of things (NB-IoT) standard. Particular examples of such machines or devices are sensors, metering devices such as power meters, industrial machinery, or home or personal appliances, e.g. refrigerators, televisions, personal wearables such as watches etc. In other scenarios, a terminal device may represent a vehicle or other equipment, for example, a medical instrument that is capable of monitoring, sensing and/or reporting etc. on its operational status or other functions associated with its operation.

As used herein, the terms "first", "second" and so forth refer to different elements. The singular forms "a" and "an" are intended to include the plural forms as well, unless the context clearly indicates otherwise. The terms "comprises", "comprising", "has", "having", "includes" and/or "including" as used herein, specify the presence of stated features, elements, and/or components and the like, but do not preclude the presence or addition of one or more other features, elements, components and/or combinations thereof. The term "based on" is to be read as "based at least in part on". The term "one embodiment" and "an embodiment" are to be read as "at least one embodiment". The term "another embodiment" is to be read as "at least one other embodiment". Other definitions, explicit and implicit, may be included below.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art. Additional information may also be found in the Appendix.

The methods and solutions of the current disclosure address the problems which occur when a base station implementing a first radio access technology (RAT) wants to control or configure a terminal device implementing the first RAT and a second RAT. This scenario may occur, for example, in scenarios where a terminal device or UE is configured with a sidelink connection (such as a V2X connection) to one or more other terminal devices or UEs. In this scenario, for example, a gNB (i.e., a base station implementing 5G standards or NR) may wish to control or configure a terminal device or UE configured with an LTE sidelink connection. Alternatively, an eNB (i.e., a base station implementing 4G standards or LTE) may wish to control or configure a terminal device or UE configured with an NR sidelink connection. In both cases, the terminal device has a first connection to the base station using the first RAT, and also a second, sidelink connection to one or more other devices using the second RAT. The following description concentrates on the former case (i.e., an gNB configuring an LTE SL UE). However, the messages described (e.g., E--UTRA RRC connection reconfiguration and NR RRC reconfiguration, or E-UTRA RRC connection reconfiguration complete and NR RRC reconfiguration complete) can be used interchangeably for the purposes of describing either case. The principles described herein may also be applied to other scenarios, such as where the second connection is not a sidelink connection but a connection to a second base station or network node.

According to embodiments of the disclosure, a terminal device (which may also refer to a wireless device) has a first connection with a serving base station using a first RAT (e.g., one of NR and LTE) and a second connection with one or more nodes using a second RAT (e.g., the other of NR and LTE). The one or more nodes may also be terminal devices, in which case the second connection is a sidelink connection. The terminal device receives a connection reconfiguration message over the first connection, comprising reconfiguration information for the second connection. For example, the reconfiguration information may be provided in a connection reconfiguration sub-message (configured according to the second RAT) embedded within the connection reconfiguration message. Responsive to successful implementation of the reconfiguration information for the second connection (e.g., reconfiguration of the second connection was successfully completed according to the reconfiguration information), the terminal device transmits a first response message to the serving base station over the first connection, comprising an indication that the reconfiguration information was successfully implemented.

Further methods are provided for the case in which reconfiguration of the second connection is not successfully implemented or completed. In this case, the terminal device triggers a failure procedure.

These methods are described in greater detail below, and with reference to the appended enumerated embodiments.

### Embodiments in which a complete message/indication is sent to a gNB that wants to control/configure a LTE V2X UE are described first.

In one embodiment, upon receiving an E-UTRA RRC connection reconfiguration message (i.e., E-UTRA RRCConnectionReconfiguration message) embedded within an NR RRC Reconfiguration message, the UE sends an E-UTRA RRC connection reconfiguration complete message embedded within an NR RRC reconfiguration complete message to inform the gNB that the E-UTRA V2X-related fields/configuration have been correctly applied. Alternatively, in another embodiment, upon receiving an E-UTRA RRC connection reconfiguration message (i.e., E-UTRA RRCConnectionReconfiguration message) embedded within an NR RRC Reconfiguration message, the UE sends an E-UTRA RRC connection reconfiguration complete message embedded within an existing RRC message used for inter-RAT purpose e.g., the ULlnformationTransferlRAT.

In another embodiment, upon receiving an E-UTRA RRC connection reconfiguration message embedded within an NR RRC Reconfiguration message, the UE sends an indication within the NR RRC reconfiguration complete message to inform the gNB that the E-UTRA V2X-related fields/configuration have been correctly applied.
- In one sub-embodiment, the indication may be a flag set to "true" or "false", where "true" indicates that the E-UTRA RRC connection reconfiguration message has been correctly received and applied, and "false" indicates that the UE did not decode successfully the E-UTRA RRC connection reconfiguration message (or vice versa).
- In another sub-embodiment, the indication may be a binary value set to "1" or "0", where "1" means that the E-UTRA RRC connection reconfiguration message has been correctly received and applied and "0" that the UE did not decode successfully the E-UTRA RRC connection reconfiguration message (or vice versa).
- In another sub-embodiment, the indication is a flag that is present/signaled only if the E-UTRA RRC connection reconfiguration message has been correctly received and applied. In this case, the presence of the flag indicates to the gNB that the reconfiguration was successfully applied.

In one embodiment, upon receiving an E-UTRA RRC connection reconfiguration message embedded within an NR RRC Reconfiguration message, the UE simply sends an NR RRC reconfiguration complete message, and this implicitly tells the gNB that the E-UTRA V2X-related fields/configuration (i.e., received within the E-UTRA RRC connection reconfiguration message) have been correctly received and applied. If the E-UTRA V2X-related fields/configuration are not successfully received or applied, no NR RRC Reconfiguration Complete message is transmitted to the gNB.

### Embodiments in which failure to decode/apply the E-UTRA V2X-related field/configuration generated by a gNB that wants to control/configure an LTE V2X UE is handled.

In one embodiment, if the UE fails to apply the V2X-related fields/configuration, it triggers a failure procedure in order to inform the gNB by including an indication in a sidelink-related RRC message e.g., SidelinkUElnformation. Note that the failure procedure may not affect the Uu connectivity between the SL UE and the gNB, if ongoing (for purposes different from sidelink).
- In one sub-embodiment, the failure procedure means releasing the PC5-RRC connectivity and sending an indication (i.e., failure cause) to the network within an existing (e.g., SidelinkUElnformation, UEAssistancelnformation) or new RRC message.

In another embodiment, if the UE fails to apply the V2X-related fields/configuration, it triggers a failure procedure in order to inform the gNB by including an indication in the NR RRC reconfiguration complete message. Note that the failure procedure may not affect the Uu connectivity between the SL UE and the gNB, if ongoing (for purposes different from sidelink).
- In one sub-embodiment, the failure procedure means releasing the PC5-RRC connectivity and sending an indication (i.e., failure cause) to the network within the NR RRC reconfiguration complete message that is sent, anyway, for acknowledging the reception of the NR RRC reconfiguration (i.e., used to configure normal Uu connectivity).
- In another sub-embodiment, the failure procedure means triggering an existing Uu procedure e.g., failure information procedure, for informing the network that the received V2X-related fields/configuration cannot be decoded/applied. The UE may set a dedicated failure cause for this particular case.

Yet, in one embodiment, if the UE fails to apply the V2X-related fields/configuration, no NR RRC reconfiguration complete message is sent to the gNB and, instead, the RRC re-establishment procedure is triggered. Note that this affects the Uu connectivity between the SL UE and the gNB, if ongoing (for purposes different from sidelink), since the whole Uu connectivity will be dropped.

In another embodiment, if the UE fails to apply the V2X-related fields/configuration, no NR RRC reconfiguration complete message (or indication, as described in the previous embodiments) is sent to the gNB.

In another embodiment, upon receiving the indication from the UE that it was not able to decode/apply the E-UTRA V2X-related fields/configuration, the network triggers RRC re-establishment procedure (i.e., both Uu and SL transmission are dropped and re-established). Yet, in another embodiment, upon receiving the indication from the UE that it was not able to decode/apply the E-UTRA V2X-related fields/configuration, the network triggers RRC release to send the UE to RRC_IDLE or RRC_INACTIVE.

Yet, in one embodiment, upon receiving the indication from the UE that it was not able to decode/apply the E-UTRA V2X-related fields/configuration, the network maintains the Uu RRC connection with the UE but it does release from the UE context the E-UTRA V2X-related fields/configuration that the UE was not able to decode/apply. Further, in another embodiment, upon receiving the indication from the UE that it was not able to decode/apply the E-UTRA V2X-related fields/configuration, the network performs no actions.

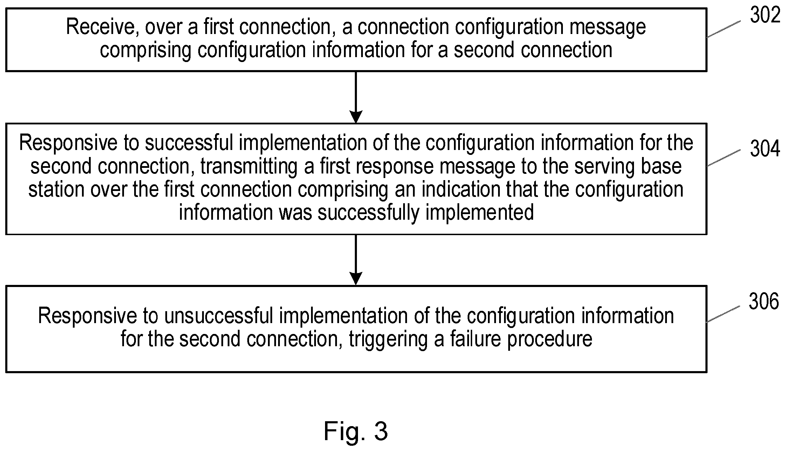

Figure 3 depicts a method in accordance with particular embodiments. The method may be performed by a terminal device (also referred to herein as a wireless device or a UE), such as the wireless device 710 or the user equipment 800 described below. The terminal device is configured with a first wireless connection to a serving base station (e.g., eNB, gNB, etc) and a second wireless connection to one or more other nodes. The one or more other nodes may include other terminal devices (in which case the second connection may be referred to as a sidelink connection), or other radio access network nodes. The second connection may be a V2X connection. The first connection utilizes a first RAT, while the second connection uses a second, different RAT. The first RAT is one of NR and LTE, and the second RAT is the other of NR and LTE.

The method begins at step 302, in which the terminal device receives a connection configuration message from the serving base station over the first connection. The connection configuration message may therefore be configured according to the first RAT. The connection configuration message may also comprise an RRC message. For example, the connection configuration message may be an NR RRC Connection Reconfiguration message, or an E-UTRAN RRC Connection Reconfiguration message.

The connection configuration message comprises configuration information for the second connection, such as RRC configuration parameters and data. That is, the serving base station wants to control or configure the second connection. In one example, the configuration information for the second connection is contained within a connection configuration sub-message, configured according to the second RAT, and embedded within the connection configuration message. For example, the configuration information may be contained within an E-UTRAN RRC Connection Reconfiguration sub-message embedded within an NR RRC Connection Reconfiguration message, or within an NR RRC Connection Reconfiguration sub-message embedded within an E-UTRAN RRC Connection Reconfiguration message.

Subsequent to receipt of the connection configuration message, the terminal device attempts to decode and implement the configuration information, i.e., apply the configuration information to the second connection.

If that implementation is successful, e.g., the configuration information is decoded successfully and configuration of the second connection according to the configuration information is completed, the method proceeds to step 304. In step 304, the terminal device transmits a first response message to the serving base station over the first connection, the first response message comprising an indication that the configuration information was successfully implemented (i.e., in the second connection).

The first response message may be configured according to the first RAT, and may comprise, for example, an RRC Reconfiguration Complete message. Thus where the first RAT is NR, for example, the first response message may comprise an NR RRC Reconfiguration Complete message; where the first RAT is LTE, for example, the first response message may comprise an E-UTRAN RRC Reconfiguration Complete message. In another example, the first response message may be an alternative message such as those defined for the purposes of inter-RAT data transfer, e.g., ULInformationTransferIRAT.

The indication that the configuration information was successfully implemented may be implicit or explicit. In the former case, the transmission of the first response message itself may be an implicit indication that the configuration of the second connection was successful. That is, the base station interprets receipt of the first response message itself as an indication that configuration of the second connection was successful.

Where the indication is explicit, it may be contained within a Reconfiguration complete sub-message, configured according to the second RAT, embedded within the first response message. For example, the indication may be contained within an NR RRC Reconfiguration complete sub-message, embedded within an E-UTRAN RRC Reconfiguration complete message; alternatively, the indication may be contained within an E-UTRAN RRC Reconfiguration complete sub-message, embedded within an NR RRC Reconfiguration complete message.

Additionally or alternatively, the indication may comprise a flag. The flag may be set to a predetermined value (e.g., "1" or "true") to indicate that configuration of the second connection was successful. Alternatively, the presence or absence of the flag itself may indicate that the second connection was successfully configured.

If the implementation of the configuration information in the second connection is unsuccessful, e.g., the configuration information is not decoded successfully, or configuration of the second connection according to the configuration information is not applied successfully, the method proceeds from step 302 to step 306. In step 306, the terminal device triggers a failure procedure.

In one embodiment, the failure procedure is predefined for another procedure, e.g., Failure information, SCG failure information, MCG failure information. Alternatively, the failure procedure may be newly defined, e.g., as an RRC failure procedure.

The failure procedure comprises transmitting, to the serving base station over the first connection, a second response message comprising an indication that implementation of the configuration information was unsuccessful. The second response message may be configured according to the first RAT. For example, the second response message may comprise a connection configuration complete message, such as NR Connection Configuration Complete (where NR is the first RAT), or E-UTRAN Connection Configuration Complete (where LTE is the first RAT). Alternatively, the second response message may comprise an information transfer message, such as SidelinkUElnformation or UEAssistancelnformation. The indication may again comprise a set bit or flag, for example. The indication may additionally or alternatively comprise a failure code indicating the reason for the failed configuration of the second connection, i.e., the second connection failed owing to failed decoding or application of the configuration message in the connection configuration message received in step 302.

The failure procedure may additionally or alternatively comprise releasing the second connection and/or the first connection. The release of the first and/or second connection may be autonomously initiated by the terminal device, or by the base station upon receipt of the second response message described above (in embodiments where that second response message is transmitted). The first and second connections may be released at the same time, or at different times. For example, the second connection may be released first. The first connection may be released at a later time, e.g., in response to further messaging failures. In this way, the general connectivity of the terminal device is not affected by failed configuration of the second connection.

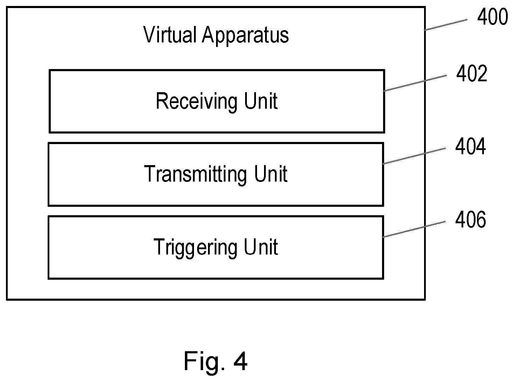

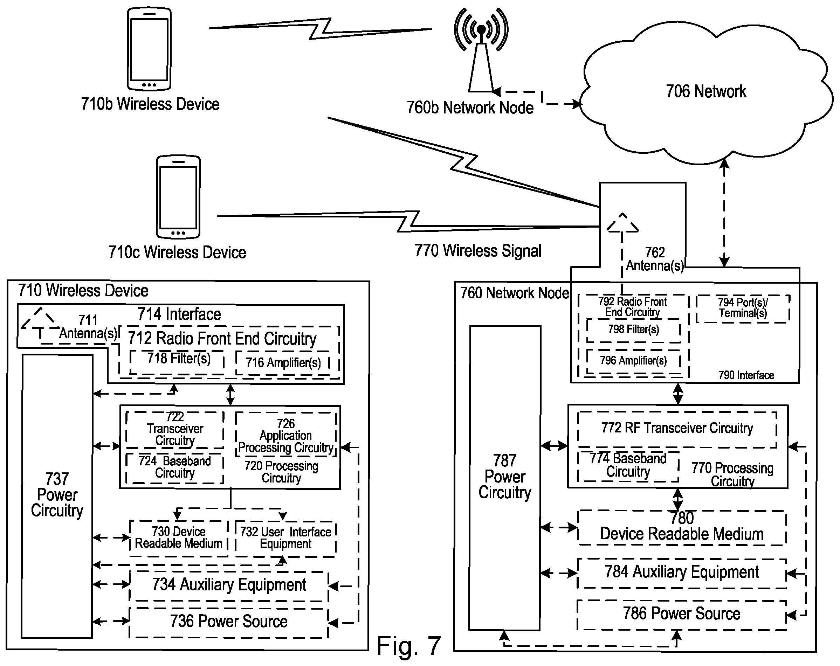

Figure 4 illustrates a schematic block diagram of an apparatus 400 in a wireless network (for example, the wireless network shown in Figure 7). The apparatus may be implemented in a terminal device or wireless device (e.g., wireless device 710 or user equipment 800). Apparatus 400 is operable to carry out the example method described with reference to Figure 3 and possibly any other processes or methods disclosed herein. It is also to be understood that the method of Figure 3 is not necessarily carried out solely by apparatus 400. At least some operations of the method can be performed by one or more other entities.

The terminal device has a first connection with a serving base station using a first radio-access technology, and a second connection with one or more nodes using a second radio-access technology.

Apparatus 400 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause receiving unit 402, transmitting unit 404 and triggering unit 406, and any other suitable units of apparatus 400 to perform corresponding functions according one or more embodiments of the present disclosure.

As illustrated in Figure 4, apparatus 400 includes receiving unit 402, transmitting unit 404 and triggering unit 406. Receiving unit 402 is configured to receive, from the serving base station over the first connection, a connection configuration message. The connection configuration message comprises configuration information for the second connection. In one embodiment, transmitting unit 404 is configured to, responsive to successful implementation of the configuration information for the second connection, transmit a first response message to the serving base station over the first connection. The first response message comprises an indication that the configuration information was successfully implemented. In another embodiment, triggering unit 406 is configured to, responsive to unsuccessful implementation of the configuration information for the second connection, triggering a failure procedure.

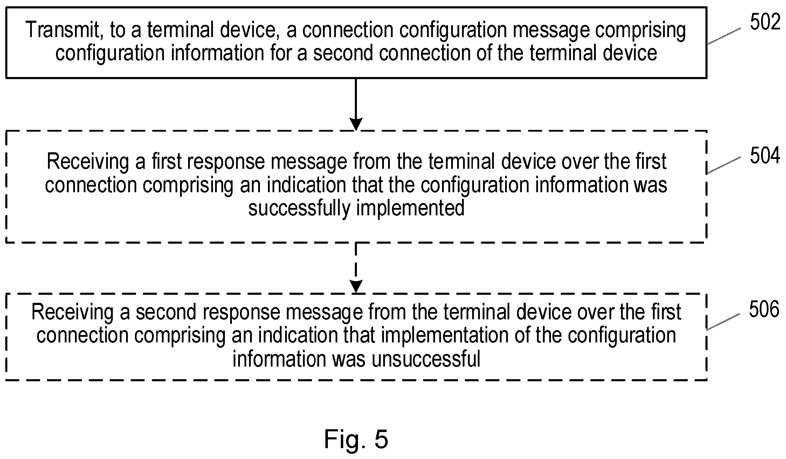

Figure 5 depicts a method in accordance with particular embodiments. The method may be performed by a base station or network node, such as the network node 760 described below. The base station has a first wireless connection to a terminal device. The terminal device has a second wireless connection to one or more other nodes. The one or more other nodes may include other terminal devices (in which case the second connection may be referred to as a sidelink connection), or other radio access network nodes. The second connection may be a V2X connection. The first connection utilizes a first RAT, while the second connection uses a second, different RAT. The first RAT is one of NR and LTE, and the second RAT is the other of NR and LTE.

The method begins at step 502, in which the base station transmits a connection configuration message to the terminal device over the first connection. The connection configuration message may therefore be configured according to the first RAT. The connection configuration message may also comprise an RRC message. For example, the connection configuration message may be an NR RRC Connection Reconfiguration message, or an E-UTRAN RRC Connection Reconfiguration message.

The connection configuration message comprises configuration information for the second connection, such as RRC configuration parameters and data. That is, the serving base station wants to control or configure the second connection. In one example, the configuration information for the second connection is contained within a connection configuration sub-message, configured according to the second RAT, and embedded within the connection configuration message. For example, the configuration information may be contained within an E-UTRAN RRC Connection Reconfiguration sub-message embedded within an NR RRC Connection Reconfiguration message, or within an NR RRC Connection Reconfiguration sub-message embedded within an E-UTRAN RRC Connection Reconfiguration message.

Subsequent to receipt of the connection configuration message, the terminal device attempts to decode and implement the configuration information, i.e., apply the configuration information to the second connection.

If that implementation is successful, e.g., the configuration information is decoded successfully and configuration of the second connection according to the configuration information is completed, the method proceeds to step 504. In step 504, the base station receives a first response message from the terminal device over the first connection, the first response message comprising an indication that the configuration information was successfully implemented (i.e., in the second connection).

The first response message may be configured according to the first RAT, and may comprise, for example, an RRC Reconfiguration Complete message. Thus where the first RAT is NR, for example, the first response message may comprise an NR RRC Reconfiguration Complete message; where the first RAT is LTE, for example, the first response message may comprise an E-UTRAN RRC Reconfiguration Complete message. In another example, the first response message may be an alternative message such as those defined for the purposes of inter-RAT data transfer, e.g., ULInformationTransferIRAT.

The indication that the configuration information was successfully implemented may be implicit or explicit. In the former case, the transmission of the first response message itself may be an implicit indication that the configuration of the second connection was successful. That is, the base station interprets receipt of the first response message itself as an indication that configuration of the second connection was successful.

Where the indication is explicit, it may be contained within a Reconfiguration complete sub-message, configured according to the second RAT, embedded within the first response message. For example, the indication may be contained within an NR RRC Reconfiguration complete sub-message, embedded within an E-UTRAN RRC Reconfiguration complete message; alternatively, the indication may be contained within an E-UTRAN RRC Reconfiguration complete sub-message, embedded within an NR RRC Reconfiguration complete message.

Additionally or alternatively, the indication may comprise a flag. The flag may be set to a predetermined value (e.g., "1" or "true") to indicate that configuration of the second connection was successful. Alternatively, the presence or absence of the flag itself may indicate that the second connection was successfully configured.

If the implementation of the configuration information in the second connection is unsuccessful, e.g., the configuration information is not decoded successfully, or configuration of the second connection according to the configuration information is not applied successfully, the method proceeds from step 502 to step 506. In step 506, the base station receives a second response message, e.g., as part of a failure procedure.

In one embodiment, the failure procedure is predefined for another procedure, e.g., Failure information, SCG failure information, MCG failure information. Alternatively, the failure procedure may be newly defined, e.g., as an RRC failure procedure.

The second response message may be configured according to the first RAT. For example, the second response message may comprise a connection configuration complete message, such as NR Connection Configuration Complete (where NR is the first RAT), or E-UTRAN Connection Configuration Complete (where LTE is the first RAT). Alternatively, the second response message may comprise an information transfer message, such as SidelinkUElnformation or UEAssistancelnformation. The indication may again comprise a set bit or flag, for example. The indication may additionally or alternatively comprise a failure code indicating the reason for the failed configuration of the second connection, i.e., the second connection failed owing to failed decoding or application of the configuration message in the connection configuration message transmitted in step 502.

The failure procedure may additionally or alternatively comprise releasing the second connection and/or the first connection. In the case of the former, the base station may release a stored context for the second connection (e.g., parameters relating to the second connection). In the latter case, a connection re-establishment procedure may be initiated. The release of the first and/or second connection may be autonomously initiated by the terminal device, or by the base station upon receipt of the second response message described above. The first and second connections may be released at the same time, or at different times. For example, the second connection may be released first. The first connection may be released at a later time, e.g., in response to further messaging failures. In this way, the general connectivity of the terminal device is not affected by failed configuration of the second connection.

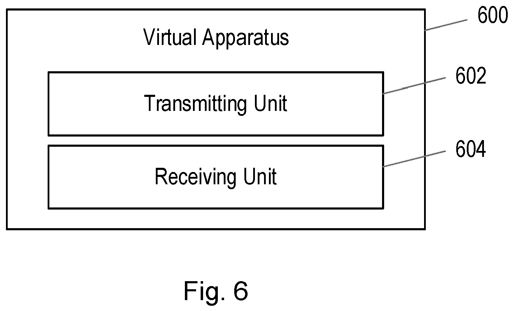

Figure 6 illustrates a schematic block diagram of an apparatus 600 in a wireless network (for example, the wireless network shown in Figure 7). The apparatus may be implemented in a base station or network node (e.g., network node 760 shown in Figure 7) having a first connection to a terminal device using a first RAT. The terminal device has a second connection to one or more nodes using a second RAT. Apparatus 600 is operable to carry out the example method described with reference to Figure 5 and possibly any other processes or methods disclosed herein. It is also to be understood that the method of Figure 5 is not necessarily carried out solely by apparatus 600. At least some operations of the method can be performed by one or more other entities.

Apparatus 600 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause transmitting unit 602 and receiving unit 604, and any other suitable units of apparatus 600 to perform corresponding functions according one or more embodiments of the present disclosure.

As illustrated in Figure 6, apparatus 600 includes transmitting unit 602 and receiving unit 604. Transmitting unit 602 is configured to transmit, to the terminal device over the first connection, a connection configuration message. The connection configuration message comprises configuration information for the second connection. In one embodiment, the receiving unit 604 is configured to receive a first response message from the terminal device over the first connection. The first response message comprises an indication that the configuration information was successfully implemented. In another embodiment, the receiving unit 604 is configured to receive a second response message from the terminal device over the first connection. The second response message comprises an indication that the implementation of the configuration information was unsuccessful.

The term "unit" may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Although the subject matter described herein may be implemented in any appropriate type of system using any suitable components, the embodiments disclosed herein are described in relation to a wireless network, such as the example wireless network illustrated in Figure 7. For simplicity, the wireless network of Figure 7 only depicts network 706, network nodes 760 and 760b, and WDs 710, 710b, and 710c. In practice, a wireless network may further include any additional elements suitable to support communication between wireless devices or between a wireless device and another communication device, such as a landline telephone, a service provider, or any other network node or end device. Of the illustrated components, network node 760 and wireless device (WD) 710 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 706 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 760 and WD 710 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 7, network node 760 includes processing circuitry 770, device readable medium 780, interface 790, auxiliary equipment 784, power source 786, power circuitry 787, and antenna 762. Although network node 760 illustrated in the example wireless network of Figure 7 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 760 are depicted as single boxes located within a larger box, or nested within multiple boxes, in practice, a network node may comprise multiple different physical components that make up a single illustrated component (e.g., device readable medium 780 may comprise multiple separate hard drives as well as multiple RAM modules).

Similarly, network node 760 may be composed of multiple physically separate components (e.g., a NodeB component and a RNC component, or a BTS component and a BSC component, etc.), which may each have their own respective components. In certain scenarios in which network node 760 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 760 may be configured to support multiple radio access technologies (RATs). In such embodiments, some components may be duplicated (e.g., separate device readable medium 780 for the different RATs) and some components may be reused (e.g., the same antenna 762 may be shared by the RATs). Network node 760 may also include multiple sets of the various illustrated components for different wireless technologies integrated into network node 760, such as, for example, GSM, WCDMA, LTE, NR, WiFi, or Bluetooth wireless technologies. These wireless technologies may be integrated into the same or different chip or set of chips and other components within network node 760.

Processing circuitry 770 is configured to perform any determining, calculating, or similar operations (e.g., certain obtaining operations) described herein as being provided by a network node. These operations performed by processing circuitry 770 may include processing information obtained by processing circuitry 770 by, for example, converting the obtained information into other information, comparing the obtained information or converted information to information stored in the network node, and/or performing one or more operations based on the obtained information or converted information, and as a result of said processing making a determination.

Processing circuitry 770 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 760 components, such as device readable medium 780, network node 760 functionality. For example, processing circuitry 770 may execute instructions stored in device readable medium 780 or in memory within processing circuitry 770. Such functionality may include providing any of the various wireless features, functions, or benefits discussed herein. In some embodiments, processing circuitry 770 may include a system on a chip (SOC).

In some embodiments, processing circuitry 770 may include one or more of radio frequency (RF) transceiver circuitry 772 and baseband processing circuitry 774. In some embodiments, radio frequency (RF) transceiver circuitry 772 and baseband processing circuitry 774 may be on separate chips (or sets of chips), boards, or units, such as radio units and digital units. In alternative embodiments, part or all of RF transceiver circuitry 772 and baseband processing circuitry 774 may be on the same chip or set of chips, boards, or units

In certain embodiments, some or all of the functionality described herein as being provided by a network node, base station, eNB or other such network device may be performed by processing circuitry 770 executing instructions stored on device readable medium 780 or memory within processing circuitry 770. In alternative embodiments, some or all of the functionality may be provided by processing circuitry 770 without executing instructions stored on a separate or discrete device readable medium, such as in a hard-wired manner. In any of those embodiments, whether executing instructions stored on a device readable storage medium or not, processing circuitry 770 can be configured to perform the described functionality. The benefits provided by such functionality are not limited to processing circuitry 770 alone or to other components of network node 760, but are enjoyed by network node 760 as a whole, and/or by end users and the wireless network generally.

Device readable medium 780 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 770. Device readable medium 780 may store any suitable instructions, data or information, including a computer program, software, an application including one or more of logic, rules, code, tables, etc. and/or other instructions capable of being executed by processing circuitry 770 and, utilized by network node 760. Device readable medium 780 may be used to store any calculations made by processing circuitry 770 and/or any data received via interface 790. In some embodiments, processing circuitry 770 and device readable medium 780 may be considered to be integrated.

Interface 790 is used in the wired or wireless communication of signalling and/or data between network node 760, network 706, and/or WDs 710. As illustrated, interface 790 comprises port(s)/terminal(s) 794 to send and receive data, for example to and from network 706 over a wired connection. Interface 790 also includes radio front end circuitry 792 that may be coupled to, or in certain embodiments a part of, antenna 762. Radio front end circuitry 792 comprises filters 798 and amplifiers 796. Radio front end circuitry 792 may be connected to antenna 762 and processing circuitry 770. Radio front end circuitry may be configured to condition signals communicated between antenna 762 and processing circuitry 770. Radio front end circuitry 792 may receive digital data that is to be sent out to other network nodes or WDs via a wireless connection. Radio front end circuitry 792 may convert the digital data into a radio signal having the appropriate channel and bandwidth parameters using a combination of filters 798 and/or amplifiers 796. The radio signal may then be transmitted via antenna 762. Similarly, when receiving data, antenna 762 may collect radio signals which are then converted into digital data by radio front end circuitry 792. The digital data may be passed to processing circuitry 770. In other embodiments, the interface may comprise different components and/or different combinations of components.

In certain alternative embodiments, network node 760 may not include separate radio front end circuitry 792, instead, processing circuitry 770 may comprise radio front end circuitry and may be connected to antenna 762 without separate radio front end circuitry 792. Similarly, in some embodiments, all or some of RF transceiver circuitry 772 may be considered a part of interface 790. In still other embodiments, interface 790 may include one or more ports or terminals 794, radio front end circuitry 792, and RF transceiver circuitry 772, as part of a radio unit (not shown), and interface 790 may communicate with baseband processing circuitry 774, which is part of a digital unit (not shown).

Antenna 762 may include one or more antennas, or antenna arrays, configured to send and/or receive wireless signals. Antenna 762 may be coupled to radio front end circuitry 790 and may be any type of antenna capable of transmitting and receiving data and/or signals wirelessly. In some embodiments, antenna 762 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 762 may be separate from network node 760 and may be connectable to network node 760 through an interface or port.

Antenna 762, interface 790, and/or processing circuitry 770 may be configured to perform any receiving operations and/or certain obtaining operations described herein as being performed by a network node. Any information, data and/or signals may be received from a wireless device, another network node and/or any other network equipment. Similarly, antenna 762, interface 790, and/or processing circuitry 770 may be configured to perform any transmitting operations described herein as being performed by a network node. Any information, data and/or signals may be transmitted to a wireless device, another network node and/or any other network equipment.

Power circuitry 787 may comprise, or be coupled to, power management circuitry and is configured to supply the components of network node 760 with power for performing the functionality described herein. Power circuitry 787 may receive power from power source 786. Power source 786 and/or power circuitry 787 may be configured to provide power to the various components of network node 760 in a form suitable for the respective components (e.g., at a voltage and current level needed for each respective component). Power source 786 may either be included in, or external to, power circuitry 787 and/or network node 760. For example, network node 760 may be connectable to an external power source (e.g., an electricity outlet) via an input circuitry or interface such as an electrical cable, whereby the external power source supplies power to power circuitry 787. As a further example, power source 786 may comprise a source of power in the form of a battery or battery pack which is connected to, or integrated in, power circuitry 787. The battery may provide backup power should the external power source fail. Other types of power sources, such as photovoltaic devices, may also be used.

Alternative embodiments of network node 760 may include additional components beyond those shown in Figure 7 that may be responsible for providing certain aspects of the network node's functionality, including any of the functionality described herein and/or any functionality necessary to support the subject matter described herein. For example, network node 760 may include user interface equipment to allow input of information into network node 760 and to allow output of information from network node 760. This may allow a user to perform diagnostic, maintenance, repair, and other administrative functions for network node 760.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 710 includes antenna 711, interface 714, processing circuitry 720, device readable medium 730, user interface equipment 732, auxiliary equipment 734, power source 736 and power circuitry 737. WD 710 may include multiple sets of one or more of the illustrated components for different wireless technologies supported by WD 710, such as, for example, GSM, WCDMA, LTE, NR, WiFi, WiMAX, or Bluetooth wireless technologies, just to mention a few. These wireless technologies may be integrated into the same or different chips or set of chips as other components within WD 710.

Antenna 711 may include one or more antennas or antenna arrays, configured to send and/or receive wireless signals, and is connected to interface 714. In certain alternative embodiments, antenna 711 may be separate from WD 710 and be connectable to WD 710 through an interface or port. Antenna 711, interface 714, and/or processing circuitry 720 may be configured to perform any receiving or transmitting operations described herein as being performed by a WD. Any information, data and/or signals may be received from a network node and/or another WD. In some embodiments, radio front end circuitry and/or antenna 711 may be considered an interface.

As illustrated, interface 714 comprises radio front end circuitry 712 and antenna 711. Radio front end circuitry 712 comprise one or more filters 718 and amplifiers 716. Radio front end circuitry 714 is connected to antenna 711 and processing circuitry 720, and is configured to condition signals communicated between antenna 711 and processing circuitry 720. Radio front end circuitry 712 may be coupled to or a part of antenna 711. In some embodiments, WD 710 may not include separate radio front end circuitry 712; rather, processing circuitry 720 may comprise radio front end circuitry and may be connected to antenna 711. Similarly, in some embodiments, some or all of RF transceiver circuitry 722 may be considered a part of interface 714. Radio front end circuitry 712 may receive digital data that is to be sent out to other network nodes or WDs via a wireless connection. Radio front end circuitry 712 may convert the digital data into a radio signal having the appropriate channel and bandwidth parameters using a combination of filters 718 and/or amplifiers 716. The radio signal may then be transmitted via antenna 711. Similarly, when receiving data, antenna 711 may collect radio signals which are then converted into digital data by radio front end circuitry 712. The digital data may be passed to processing circuitry 720. In other embodiments, the interface may comprise different components and/or different combinations of components.

Processing circuitry 720 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 710 components, such as device readable medium 730, WD 710 functionality. Such functionality may include providing any of the various wireless features or benefits discussed herein. For example, processing circuitry 720 may execute instructions stored in device readable medium 730 or in memory within processing circuitry 720 to provide the functionality disclosed herein.

As illustrated, processing circuitry 720 includes one or more of RF transceiver circuitry 722, baseband processing circuitry 724, and application processing circuitry 726. In other embodiments, the processing circuitry may comprise different components and/or different combinations of components. In certain embodiments processing circuitry 720 of WD 710 may comprise a SOC. In some embodiments, RF transceiver circuitry 722, baseband processing circuitry 724, and application processing circuitry 726 may be on separate chips or sets of chips. In alternative embodiments, part or all of baseband processing circuitry 724 and application processing circuitry 726 may be combined into one chip or set of chips, and RF transceiver circuitry 722 may be on a separate chip or set of chips. In still alternative embodiments, part or all of RF transceiver circuitry 722 and baseband processing circuitry 724 may be on the same chip or set of chips, and application processing circuitry 726 may be on a separate chip or set of chips. In yet other alternative embodiments, part or all of RF transceiver circuitry 722, baseband processing circuitry 724, and application processing circuitry 726 may be combined in the same chip or set of chips. In some embodiments, RF transceiver circuitry 722 may be a part of interface 714. RF transceiver circuitry 722 may condition RF signals for processing circuitry 720.

In certain embodiments, some or all of the functionality described herein as being performed by a WD may be provided by processing circuitry 720 executing instructions stored on device readable medium 730, which in certain embodiments may be a computer-readable storage medium. In alternative embodiments, some or all of the functionality may be provided by processing circuitry 720 without executing instructions stored on a separate or discrete device readable storage medium, such as in a hard-wired manner. In any of those particular embodiments, whether executing instructions stored on a device readable storage medium or not, processing circuitry 720 can be configured to perform the described functionality. The benefits provided by such functionality are not limited to processing circuitry 720 alone or to other components of WD 710, but are enjoyed by WD 710 as a whole, and/or by end users and the wireless network generally.

Processing circuitry 720 may be configured to perform any determining, calculating, or similar operations (e.g., certain obtaining operations) described herein as being performed by a WD. These operations, as performed by processing circuitry 720, may include processing information obtained by processing circuitry 720 by, for example, converting the obtained information into other information, comparing the obtained information or converted information to information stored by WD 710, and/or performing one or more operations based on the obtained information or converted information, and as a result of said processing making a determination.

Device readable medium 730 may be operable to store a computer program, software, an application including one or more of logic, rules, code, tables, etc. and/or other instructions capable of being executed by processing circuitry 720. Device readable medium 730 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 720. In some embodiments, processing circuitry 720 and device readable medium 730 may be considered to be integrated.

User interface equipment 732 may provide components that allow for a human user to interact with WD 710. Such interaction may be of many forms, such as visual, audial, tactile, etc. User interface equipment 732 may be operable to produce output to the user and to allow the user to provide input to WD 710. The type of interaction may vary depending on the type of user interface equipment 732 installed in WD 710. For example, if WD 710 is a smart phone, the interaction may be via a touch screen; if WD 710 is a smart meter, the interaction may be through a screen that provides usage (e.g., the number of gallons used) or a speaker that provides an audible alert (e.g., if smoke is detected). User interface equipment 732 may include input interfaces, devices and circuits, and output interfaces, devices and circuits. User interface equipment 732 is configured to allow input of information into WD 710, and is connected to processing circuitry 720 to allow processing circuitry 720 to process the input information. User interface equipment 732 may include, for example, a microphone, a proximity or other sensor, keys/buttons, a touch display, one or more cameras, a USB port, or other input circuitry. User interface equipment 732 is also configured to allow output of information from WD 710, and to allow processing circuitry 720 to output information from WD 710. User interface equipment 732 may include, for example, a speaker, a display, vibrating circuitry, a USB port, a headphone interface, or other output circuitry. Using one or more input and output interfaces, devices, and circuits, of user interface equipment 732, WD 710 may communicate with end users and/or the wireless network, and allow them to benefit from the functionality described herein.

Auxiliary equipment 734 is operable to provide more specific functionality which may not be generally performed by WDs. This may comprise specialized sensors for doing measurements for various purposes, interfaces for additional types of communication such as wired communications etc. The inclusion and type of components of auxiliary equipment 734 may vary depending on the embodiment and/or scenario.

Power source 736 may, in some embodiments, be in the form of a battery or battery pack. Other types of power sources, such as an external power source (e.g., an electricity outlet), photovoltaic devices or power cells, may also be used. WD 710 may further comprise power circuitry 737 for delivering power from power source 736 to the various parts of WD 710 which need power from power source 736 to carry out any functionality described or indicated herein. Power circuitry 737 may in certain embodiments comprise power management circuitry. Power circuitry 737 may additionally or alternatively be operable to receive power from an external power source; in which case WD 710 may be connectable to the external power source (such as an electricity outlet) via input circuitry or an interface such as an electrical power cable. Power circuitry 737 may also in certain embodiments be operable to deliver power from an external power source to power source 736. This may be, for example, for the charging of power source 736. Power circuitry 737 may perform any formatting, converting, or other modification to the power from power source 736 to make the power suitable for the respective components of WD 710 to which power is supplied.

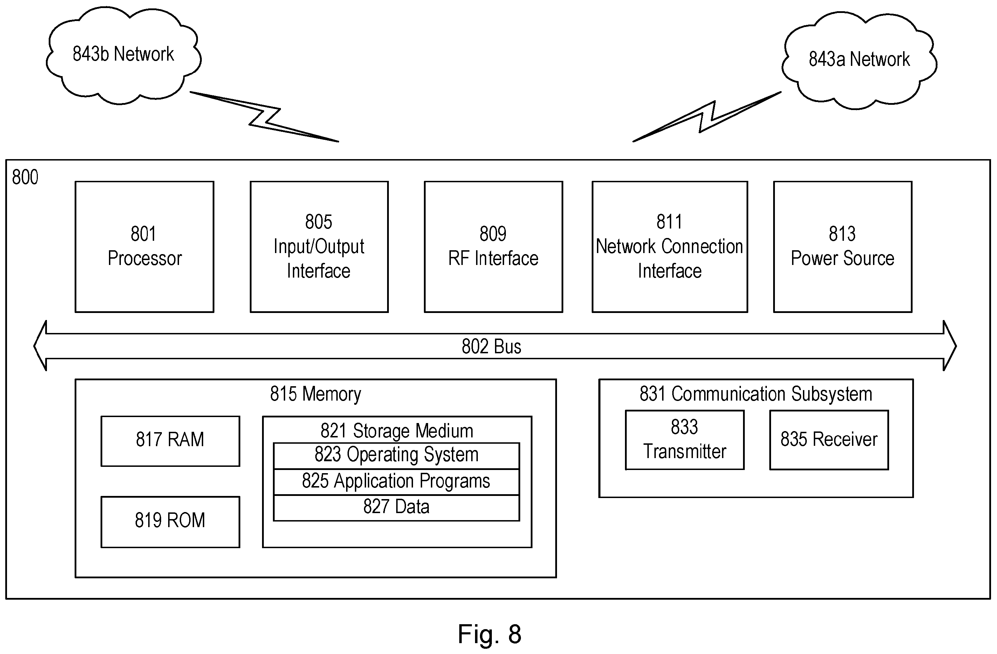

Figure 8 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 800 may be any UE identified by the 3^{rd} Generation Partnership Project (3GPP), including a NB-loT UE, a machine type communication (MTC) UE, and/or an enhanced MTC (eMTC) UE. UE 800, as illustrated in Figure 8, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although Figure 8 is a UE, the components discussed herein are equally applicable to a WD, and vice-versa.

In Figure 8, UE 800 includes processing circuitry 801 that is operatively coupled to input/output interface 805, radio frequency (RF) interface 809, network connection interface 811, memory 815 including random access memory (RAM) 817, read-only memory (ROM) 819, and storage medium 821 or the like, communication subsystem 831, power source 833, and/or any other component, or any combination thereof. Storage medium 821 includes operating system 823, application program 825, and data 827. In other embodiments, storage medium 821 may include other similar types of information. Certain UEs may utilize all of the components shown in Figure 8, or only a subset of the components. The level of integration between the components may vary from one UE to another UE. Further, certain UEs may contain multiple instances of a component, such as multiple processors, memories, transceivers, transmitters, receivers, etc.

In Figure 8, processing circuitry 801 may be configured to process computer instructions and data. Processing circuitry 801 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 801 may include two central processing units (CPUs). Data may be information in a form suitable for use by a computer.

In the depicted embodiment, input/output interface 805 may be configured to provide a communication interface to an input device, output device, or input and output device. UE 800 may be configured to use an output device via input/output interface 805. An output device may use the same type of interface port as an input device. For example, a USB port may be used to provide input to and output from UE 800. The output device may be a speaker, a sound card, a video card, a display, a monitor, a printer, an actuator, an emitter, a smartcard, another output device, or any combination thereof. UE 800 may be configured to use an input device via input/output interface 805 to allow a user to capture information into UE 800. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 8, RF interface 809 may be configured to provide a communication interface to RF components such as a transmitter, a receiver, and an antenna. Network connection interface 811 may be configured to provide a communication interface to network 843a. Network 843a may encompass wired and/or wireless networks such as a local-area network (LAN), a wide-area network (WAN), a computer network, a wireless network, a telecommunications network, another like network or any combination thereof. For example, network 843a may comprise a Wi-Fi network. Network connection interface 811 may be configured to include a receiver and a transmitter interface used to communicate with one or more other devices over a communication network according to one or more communication protocols, such as Ethernet, TCP/IP, SONET, ATM, or the like. Network connection interface 811 may implement receiver and transmitter functionality appropriate to the communication network links (e.g., optical, electrical, and the like). The transmitter and receiver functions may share circuit components, software or firmware, or alternatively may be implemented separately.

RAM 817 may be configured to interface via bus 802 to processing circuitry 801 to provide storage or caching of data or computer instructions during the execution of software programs such as the operating system, application programs, and device drivers. ROM 819 may be configured to provide computer instructions or data to processing circuitry 801. For example, ROM 819 may be configured to store invariant low-level system code or data for basic system functions such as basic input and output (I/O), startup, or reception of keystrokes from a keyboard that are stored in a non-volatile memory. Storage medium 821 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 821 may be configured to include operating system 823, application program 825 such as a web browser application, a widget or gadget engine or another application, and data file 827. Storage medium 821 may store, for use by UE 800, any of a variety of various operating systems or combinations of operating systems.

Storage medium 821 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 821 may allow UE 800 to access computer-executable instructions, application programs or the like, stored on transitory or non-transitory memory media, to off-load data, or to upload data. An article of manufacture, such as one utilizing a communication system may be tangibly embodied in storage medium 821, which may comprise a device readable medium.

In Figure 8, processing circuitry 801 may be configured to communicate with network 843b using communication subsystem 831. Network 843a and network 843b may be the same network or networks or different network or networks. Communication subsystem 831 may be configured to include one or more transceivers used to communicate with network 843b. For example, communication subsystem 831 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 833 and/or receiver 835 to implement transmitter or receiver functionality, respectively, appropriate to the RAN links (e.g., frequency allocations and the like). Further, transmitter 833 and receiver 835 of each transceiver may share circuit components, software or firmware, or alternatively may be implemented separately.

In the illustrated embodiment, the communication functions of communication subsystem 831 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 831 may include cellular communication, Wi-Fi communication, Bluetooth communication, and GPS communication. Network 843b may encompass wired and/or wireless networks such as a local-area network (LAN), a wide-area network (WAN), a computer network, a wireless network, a telecommunications network, another like network or any combination thereof. For example, network 843b may be a cellular network, a Wi-Fi network, and/or a near-field network. Power source 813 may be configured to provide alternating current (AC) or direct current (DC) power to components of UE 800.

The features, benefits and/or functions described herein may be implemented in one of the components of UE 800 or partitioned across multiple components of UE 800. Further, the features, benefits, and/or functions described herein may be implemented in any combination of hardware, software or firmware. In one example, communication subsystem 831 may be configured to include any of the components described herein. Further, processing circuitry 801 may be configured to communicate with any of such components over bus 802. In another example, any of such components may be represented by program instructions stored in memory that when executed by processing circuitry 801 perform the corresponding functions described herein. In another example, the functionality of any of such components may be partitioned between processing circuitry 801 and communication subsystem 831. In another example, the non-computationally intensive functions of any of such components may be implemented in software or firmware and the computationally intensive functions may be implemented in hardware.

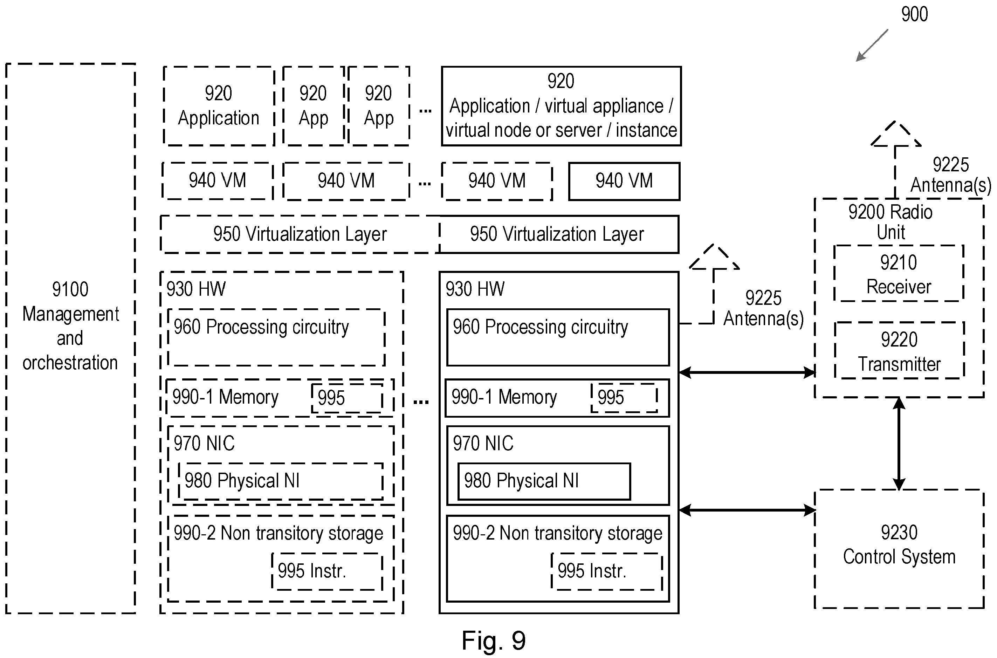

Figure 9 is a schematic block diagram illustrating a virtualization environment 900 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 900 hosted by one or more of hardware nodes 930. Further, in embodiments in which the virtual node is not a radio access node or does not require radio connectivity (e.g., a core network node), then the network node may be entirely virtualized.

The functions may be implemented by one or more applications 920 (which may alternatively be called software instances, virtual appliances, network functions, virtual nodes, virtual network functions, etc.) operative to implement some of the features, functions, and/or benefits of some of the embodiments disclosed herein. Applications 920 are run in virtualization environment 900 which provides hardware 930 comprising processing circuitry 960 and memory 990. Memory 990 contains instructions 995 executable by processing circuitry 960 whereby application 920 is operative to provide one or more of the features, benefits, and/or functions disclosed herein.

Virtualization environment 900, comprises general-purpose or special-purpose network hardware devices 930 comprising a set of one or more processors or processing circuitry 960, which may be commercial off-the-shelf (COTS) processors, dedicated Application Specific Integrated Circuits (ASICs), or any other type of processing circuitry including digital or analog hardware components or special purpose processors. Each hardware device may comprise memory 990-1 which may be non-persistent memory for temporarily storing instructions 995 or software executed by processing circuitry 960. Each hardware device may comprise one or more network interface controllers (NICs) 970, also known as network interface cards, which include physical network interface 980. Each hardware device may also include non-transitory, persistent, machine-readable storage media 990-2 having stored therein software 995 and/or instructions executable by processing circuitry 960. Software 995 may include any type of software including software for instantiating one or more virtualization layers 950 (also referred to as hypervisors), software to execute virtual machines 940 as well as software allowing it to execute functions, features and/or benefits described in relation with some embodiments described herein.

Virtual machines 940, comprise virtual processing, virtual memory, virtual networking or interface and virtual storage, and may be run by a corresponding virtualization layer 950 or hypervisor. Different embodiments of the instance of virtual appliance 920 may be implemented on one or more of virtual machines 940, and the implementations may be made in different ways.

During operation, processing circuitry 960 executes software 995 to instantiate the hypervisor or virtualization layer 950, which may sometimes be referred to as a virtual machine monitor (VMM). Virtualization layer 950 may present a virtual operating platform that appears like networking hardware to virtual machine 940.

As shown in Figure 9, hardware 930 may be a standalone network node with generic or specific components. Hardware 930 may comprise antenna 9225 and may implement some functions via virtualization. Alternatively, hardware 930 may be part of a larger cluster of hardware (e.g. such as in a data center or customer premise equipment (CPE)) where many hardware nodes work together and are managed via management and orchestration (MANO) 9100, which, among others, oversees lifecycle management of applications 920.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 940 may be a software implementation of a physical machine that runs programs as if they were executing on a physical, non-virtualized machine. Each of virtual machines 940, and that part of hardware 930 that executes that virtual machine, be it hardware dedicated to that virtual machine and/or hardware shared by that virtual machine with others of the virtual machines 940, forms a separate virtual network elements (VNE).

Still in the context of NFV, Virtual Network Function (VNF) is responsible for handling specific network functions that run in one or more virtual machines 940 on top of hardware networking infrastructure 930 and corresponds to application 920 in Figure 9.

In some embodiments, one or more radio units 9200 that each include one or more transmitters 9220 and one or more receivers 9210 may be coupled to one or more antennas 9225. Radio units 9200 may communicate directly with hardware nodes 930 via one or more appropriate network interfaces and may be used in combination with the virtual components to provide a virtual node with radio capabilities, such as a radio access node or a base station.

In some embodiments, some signalling can be effected with the use of control system 9230 which may alternatively be used for communication between the hardware nodes 930 and radio units 9200.

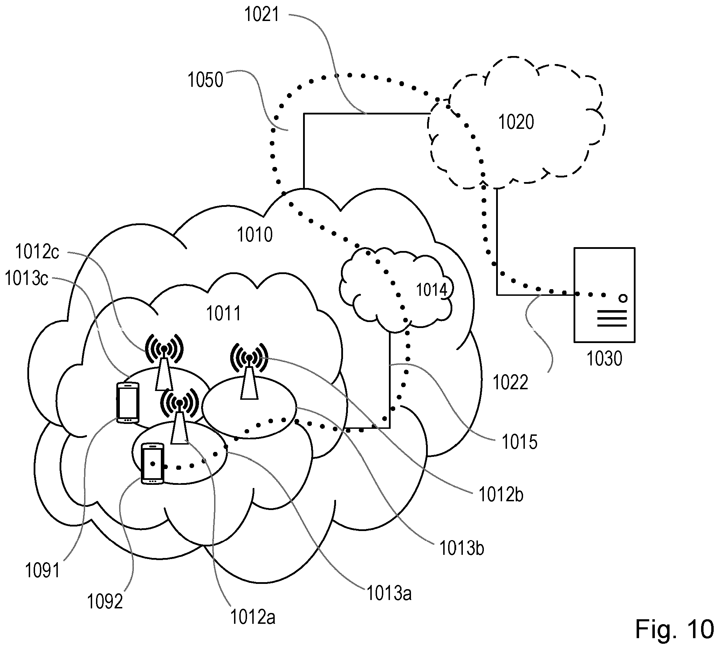

With reference to FIGURE 10, in accordance with an embodiment, a communication system includes telecommunication network 1010, such as a 3GPP-type cellular network, which comprises access network 1011, such as a radio access network, and core network 1014. Access network 1011 comprises a plurality of base stations 1012a, 1012b, 1012c, such as NBs, eNBs, gNBs or other types of wireless access points, each defining a corresponding coverage area 1013a, 1013b, 1013c. Each base station 1012a, 1012b, 1012c is connectable to core network 1014 over a wired or wireless connection 1015. A first UE 1091 located in coverage area 1013c is configured to wirelessly connect to, or be paged by, the corresponding base station 1012c. A second UE 1092 in coverage area 1013a is wirelessly connectable to the corresponding base station 1012a. While a plurality of UEs 1091, 1092 are illustrated in this example, the disclosed embodiments are equally applicable to a situation where a sole UE is in the coverage area or where a sole UE is connecting to the corresponding base station 1012.

Telecommunication network 1010 is itself connected to host computer 1030, which may be embodied in the hardware and/or software of a standalone server, a cloud-implemented server, a distributed server or as processing resources in a server farm. Host computer 1030 may be under the ownership or control of a service provider, or may be operated by the service provider or on behalf of the service provider. Connections 1021 and 1022 between telecommunication network 1010 and host computer 1030 may extend directly from core network 1014 to host computer 1030 or may go via an optional intermediate network 1020. Intermediate network 1020 may be one of, or a combination of more than one of, a public, private or hosted network; intermediate network 1020, if any, may be a backbone network or the Internet; in particular, intermediate network 1020 may comprise two or more sub-networks (not shown).

The communication system of Figure 10 as a whole enables connectivity between the connected UEs 1091, 1092 and host computer 1030. The connectivity may be described as an over-the-top (OTT) connection 1050. Host computer 1030 and the connected UEs 1091, 1092 are configured to communicate data and/or signaling via OTT connection 1050, using access network 1011, core network 1014, any intermediate network 1020 and possible further infrastructure (not shown) as intermediaries. OTT connection 1050 may be transparent in the sense that the participating communication devices through which OTT connection 1050 passes are unaware of routing of uplink and downlink communications. For example, base station 1012 may not or need not be informed about the past routing of an incoming downlink communication with data originating from host computer 1030 to be forwarded (e.g., handed over) to a connected UE 1091. Similarly, base station 1012 need not be aware of the future routing of an outgoing uplink communication originating from the UE 1091 towards the host computer 1030.

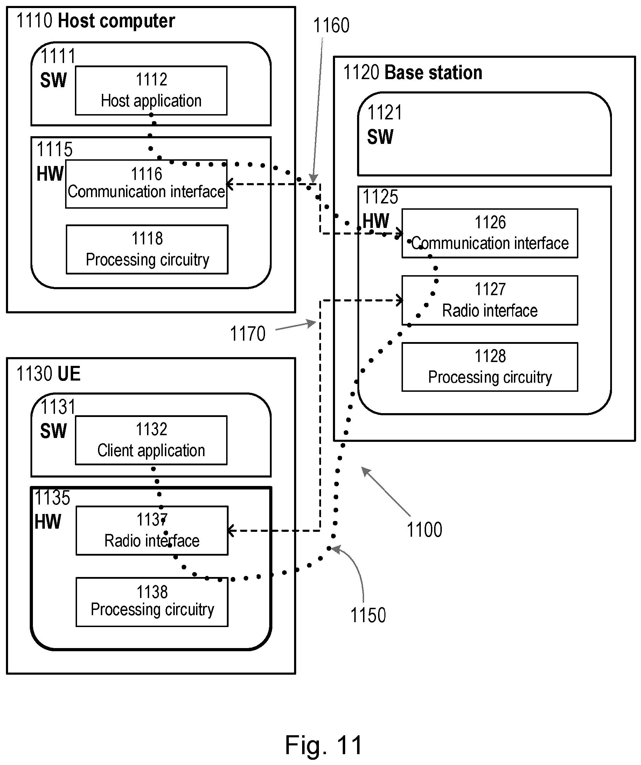

Example implementations, in accordance with an embodiment, of the UE, base station and host computer discussed in the preceding paragraphs will now be described with reference to Figure 11. In communication system 1100, host computer 1110 comprises hardware 1115 including communication interface 1116 configured to set up and maintain a wired or wireless connection with an interface of a different communication device of communication system 1100. Host computer 1110 further comprises processing circuitry 1118, which may have storage and/or processing capabilities. In particular, processing circuitry 1118 may comprise one or more programmable processors, application-specific integrated circuits, field programmable gate arrays or combinations of these (not shown) adapted to execute instructions. Host computer 1110 further comprises software 1111, which is stored in or accessible by host computer 1110 and executable by processing circuitry 1118. Software 1111 includes host application 1112. Host application 1112 may be operable to provide a service to a remote user, such as UE 1130 connecting via OTT connection 1150 terminating at UE 1130 and host computer 1110. In providing the service to the remote user, host application 1112 may provide user data which is transmitted using OTT connection 1150.

Communication system 1100 further includes base station 1120 provided in a telecommunication system and comprising hardware 1125 enabling it to communicate with host computer 1110 and with UE 1130. Hardware 1125 may include communication interface 1126 for setting up and maintaining a wired or wireless connection with an interface of a different communication device of communication system 1100, as well as radio interface 1127 for setting up and maintaining at least wireless connection 1170 with UE 1130 located in a coverage area (not shown in Figure 11) served by base station 1120. Communication interface 1126 may be configured to facilitate connection 1160 to host computer 1110. Connection 1160 may be direct or it may pass through a core network (not shown in Figure 11) of the telecommunication system and/or through one or more intermediate networks outside the telecommunication system. In the embodiment shown, hardware 1125 of base station 1120 further includes processing circuitry 1128, which may comprise one or more programmable processors, application-specific integrated circuits, field programmable gate arrays or combinations of these (not shown) adapted to execute instructions. Base station 1120 further has software 1121 stored internally or accessible via an external connection.

Communication system 1100 further includes UE 1130 already referred to. Its hardware 1135 may include radio interface 1137 configured to set up and maintain wireless connection 1170 with a base station serving a coverage area in which UE 1130 is currently located. Hardware 1135 of UE 1130 further includes processing circuitry 1138, which may comprise one or more programmable processors, application-specific integrated circuits, field programmable gate arrays or combinations of these (not shown) adapted to execute instructions. UE 1130 further comprises software 1131, which is stored in or accessible by UE 1130 and executable by processing circuitry 1138. Software 1131 includes client application 1132. Client application 1132 may be operable to provide a service to a human or non-human user via UE 1130, with the support of host computer 1110. In host computer 1110, an executing host application 1112 may communicate with the executing client application 1132 via OTT connection 1150 terminating at UE 1130 and host computer 1110. In providing the service to the user, client application 1132 may receive request data from host application 1112 and provide user data in response to the request data. OTT connection 1150 may transfer both the request data and the user data. Client application 1132 may interact with the user to generate the user data that it provides.

It is noted that host computer 1110, base station 1120 and UE 1130 illustrated in Figure 11 may be similar or identical to host computer 1030, one of base stations 1012a, 1012b, 1012c and one of UEs 1091, 1092 of Figure 10, respectively. This is to say, the inner workings of these entities may be as shown in Figure 11 and independently, the surrounding network topology may be that of Figure 10.

In Figure 11, OTT connection 1150 has been drawn abstractly to illustrate the communication between host computer 1110 and UE 1130 via base station 1120, without explicit reference to any intermediary devices and the precise routing of messages via these devices. Network infrastructure may determine the routing, which it may be configured to hide from UE 1130 or from the service provider operating host computer 1110, or both. While OTT connection 1150 is active, the network infrastructure may further take decisions by which it dynamically changes the routing (e.g., on the basis of load balancing consideration or reconfiguration of the network).

Wireless connection 1170 between UE 1130 and base station 1120 is in accordance with the teachings of the embodiments described throughout this disclosure. One or more of the various embodiments improve the performance of OTT services provided to UE 1130 using OTT connection 1150, in which wireless connection 1170 forms the last segment. More precisely, the teachings of these embodiments may improve the data rate and latency of communications, and thereby provide benefits such as reduced user waiting time and better responsiveness.

A measurement procedure may be provided for the purpose of monitoring data rate, latency and other factors on which the one or more embodiments improve. There may further be an optional network functionality for reconfiguring OTT connection 1150 between host computer 1110 and UE 1130, in response to variations in the measurement results. The measurement procedure and/or the network functionality for reconfiguring OTT connection 1150 may be implemented in software 1111 and hardware 1115 of host computer 1110 or in software 1131 and hardware 1135 of UE 1130, or both. In embodiments, sensors (not shown) may be deployed in or in association with communication devices through which OTT connection 1150 passes; the sensors may participate in the measurement procedure by supplying values of the monitored quantities exemplified above, or supplying values of other physical quantities from which software 1111, 1131 may compute or estimate the monitored quantities. The reconfiguring of OTT connection 1150 may include message format, retransmission settings, preferred routing etc.; the reconfiguring need not affect base station 1120, and it may be unknown or imperceptible to base station 1120. Such procedures and functionalities may be known and practiced in the art. In certain embodiments, measurements may involve proprietary UE signaling facilitating host computer 1110's measurements of throughput, propagation times, latency and the like. The measurements may be implemented in that software 1111 and 1131 causes messages to be transmitted, in particular empty or 'dummy' messages, using OTT connection 1150 while it monitors propagation times, errors etc.

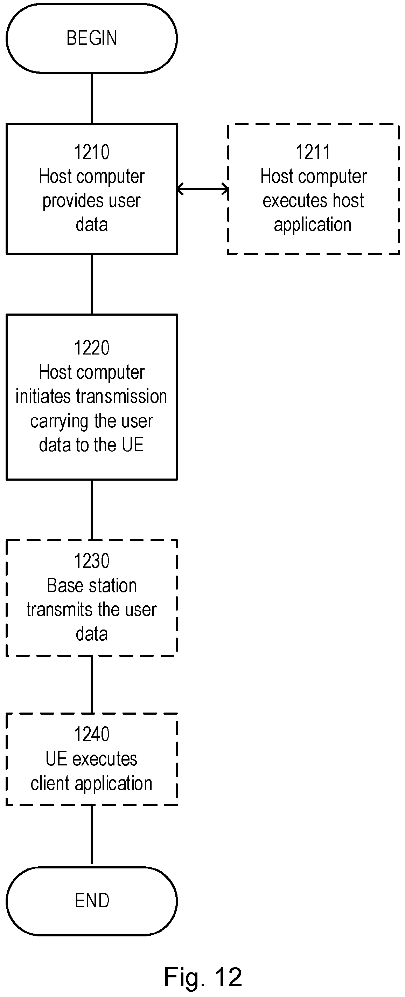

Figure 12 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 12 will be included in this section. In step 1210, the host computer provides user data. In substep 1211 (which may be optional) of step 1210, the host computer provides the user data by executing a host application. In step 1220, the host computer initiates a transmission carrying the user data to the UE. In step 1230 (which may be optional), the base station transmits to the UE the user data which was carried in the transmission that the host computer initiated, in accordance with the teachings of the embodiments described throughout this disclosure. In step 1240 (which may also be optional), the UE executes a client application associated with the host application executed by the host computer.

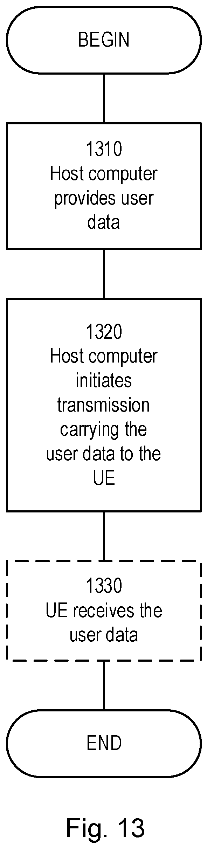

Figure 13 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 13 will be included in this section. In step 1310 of the method, the host computer provides user data. In an optional substep (not shown) the host computer provides the user data by executing a host application. In step 1320, the host computer initiates a transmission carrying the user data to the UE. The transmission may pass via the base station, in accordance with the teachings of the embodiments described throughout this disclosure. In step 1330 (which may be optional), the UE receives the user data carried in the transmission.

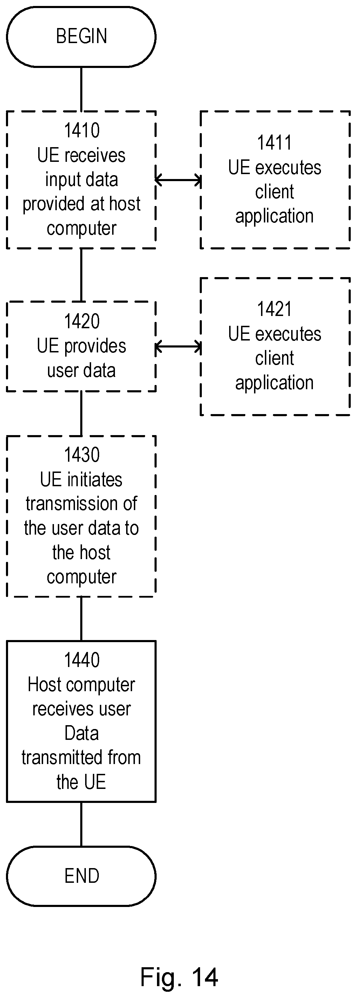

Figure 14 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 14 will be included in this section. In step 1410 (which may be optional), the UE receives input data provided by the host computer. Additionally or alternatively, in step 1420, the UE provides user data. In substep 1421 (which may be optional) of step 1420, the UE provides the user data by executing a client application. In substep 1411 (which may be optional) of step 1410, the UE executes a client application which provides the user data in reaction to the received input data provided by the host computer. In providing the user data, the executed client application may further consider user input received from the user. Regardless of the specific manner in which the user data was provided, the UE initiates, in substep 1430 (which may be optional), transmission of the user data to the host computer. In step 1440 of the method, the host computer receives the user data transmitted from the UE, in accordance with the teachings of the embodiments described throughout this disclosure.

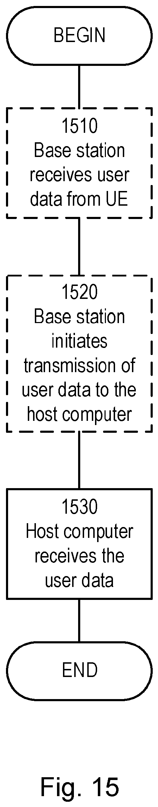

Figure 15 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 15 will be included in this section. In step 1510 (which may be optional), in accordance with the teachings of the embodiments described throughout this disclosure, the base station receives user data from the UE. In step 1520 (which may be optional), the base station initiates transmission of the received user data to the host computer. In step 1530 (which may be optional), the host computer receives the user data carried in the transmission initiated by the base station.

### APPENDIX

The following text sets out examples of how signalling support may be provided to enable a UE to report successful implementation of an RRC configuration message, e.g., in crossRAT sidelink. The examples are shown as changes to TS 38.331. Those skilled in the art will appreciate that corresponding changes may be made to TS 36.331 for the case where an eNB wants to configure an NR V2X UE.

### 1.1 Embodiment 1: E-UTRA RRC Connection Reconfiguration complete embedded within an NR RRC reconfiguration complete

### 5.3.5.3 Reception of an RRCReconfiguration by the UE

The UE shall perform the following actions upon reception of the *RRCReconfiguration,* or upon execution of the conditional configuration (CHO or CPC):
1> if the *RRCReconfiguration* is applied due to a conditional configurationexecution upon cell selection while timer T311 is running, as defined in 5.3.7.3:
   *<text omitted>*
1> set the content of the *RRCReconfigurationComplete* message as follows:
   *<text omitted>*
   2> if the *RRCReconfiguration* message includes the *sl-ConfigDedicatedEUTRA-Info:*
      3> include the E-UTRA *RRCConnectionReconfigurationComplete* message within the *sl-ConfigDedicatedEUTRA-Complete*;
   2> if the UE has logged measurements available for NR and if the RPLMN is included in *plmn-IdentityList* stored in *VarLogMeasReport:*
      *<text omitted>*
   2> the procedure ends.
NOTE 3: The UE is only required to acquire broadcasted *SIB1* if the UE can acquire it without disrupting unicast data reception, i.e. the broadcast and unicast beams are quasi co-located.

The corresponding ASN.1 changes are as follows:

### 6.2.2 Message definitions

### - RRCReconfigurationComplete

The *RRCReconfigurationComplete* message is used to confirm the successful completion of an RRC connection reconfiguration.
Signalling radio bearer: SRB1 or SRB3
RLC-SAP: AM
Logical channel: DCCH
Direction: UE to Network

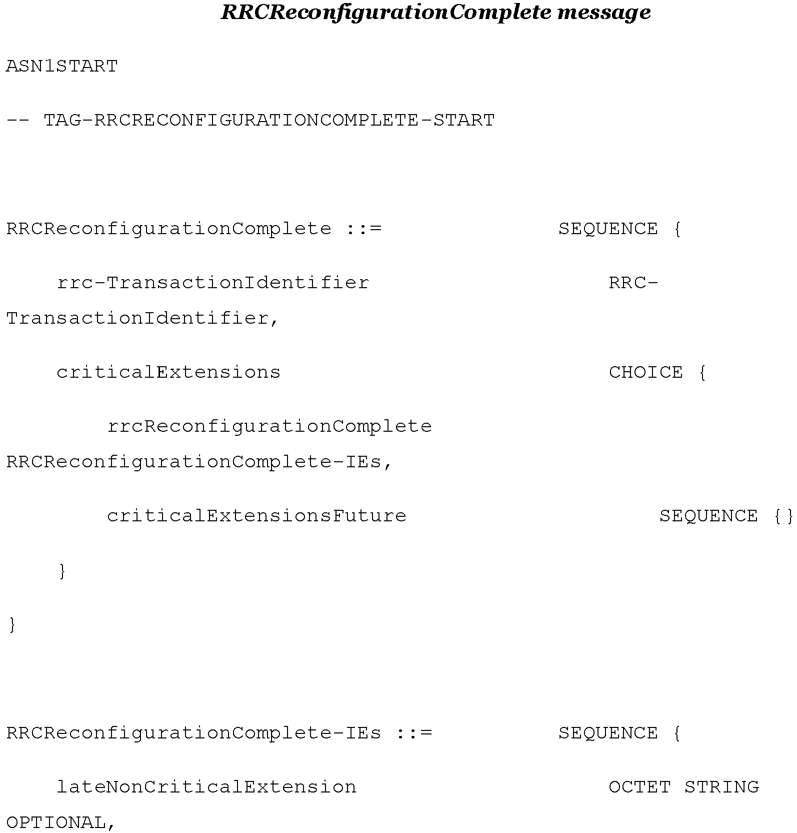

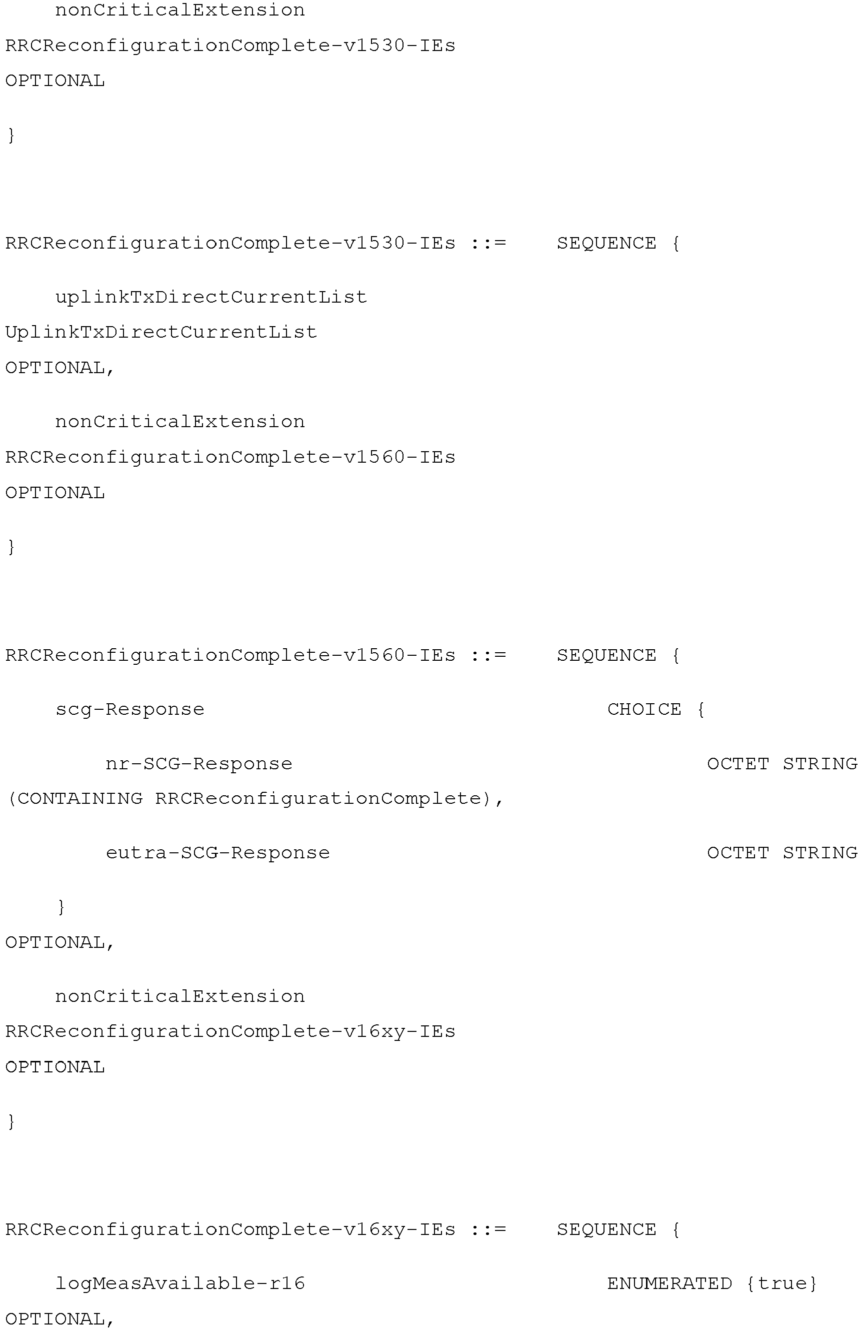

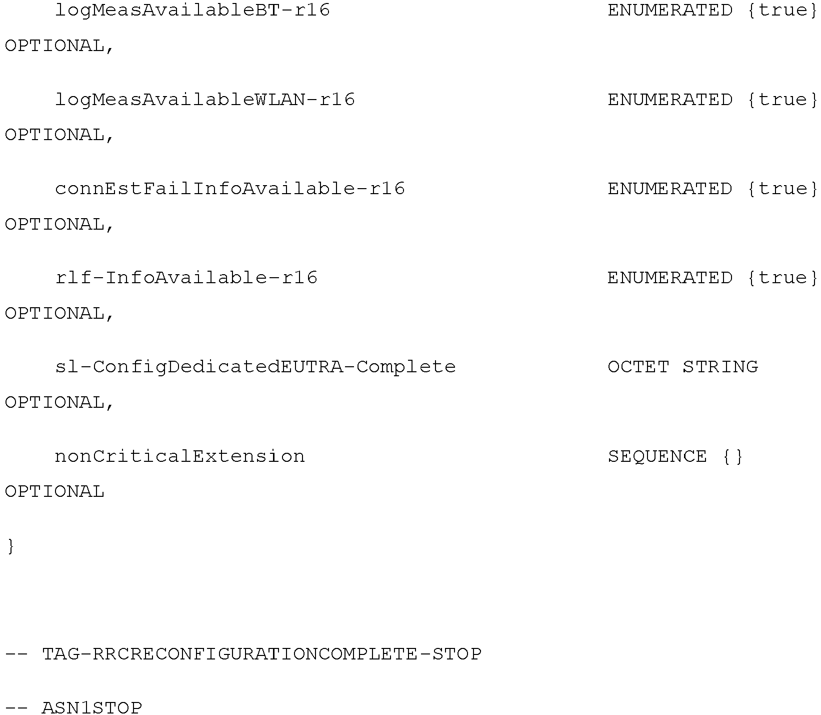

### 1.2 Embodiment 2: E-UTRA RRC connection reconfiguration complete message sent via the NR ULInformationTransferIRAT message

### 5.3.5.3 Reception of an RRCReconfiguration by the UE

The UE shall perform the following actions upon reception of the *RRCReconfiguration,* or upon execution of the conditional configuration (CHO or CPC):
1> if the *RRCReconfiguration* is applied due to a conditional configurationexecution upon cell selection while timer T311 is running, as defined in 5.3.7.3:
   *<text omitted>*
1> set the content of the *RRCReconfigurationComplete* message as follows:
   *<text omitted>*
   2> if the *RRCReconfiguration* message includes the *sl-ConfigDedicatedEUTRA-Info:*
      3> include the E-UTRA *RRCConnectionReconfigurationComplete* message within the *ULInformationTrasferIRAT* message according to clause 5.7.x;
      3> submit the *ULInformationTrasferIRAT* message to lower layers for transmission via SRB1.
   2> if the UE has logged measurements available for NR and if the RPLMN is included in *plmn-IdentityList* stored in *VarLogMeasReport:*
      *<text omitted>*
   2> the procedure ends.
NOTE 3: The UE is only required to acquire broadcasted *SIB1* if the UE can acquire it without disrupting unicast data reception, i.e. the broadcast and unicast beams are quasi co-located.

### 5.7.x UL transfer of IRAT information

### 5.7.x.1 General

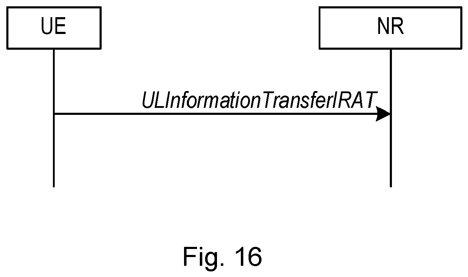

See Figure 16.

The purpose of this procedure is to transfer from the UE to NR MCG dedicated information terminated at the NR MCG but specified by anoher RAT e.g. the E-UTRA MeasurementReport message, the E-UTRA SidelinkUEInformation message or the E-UTRA UEAssistanceInformation message. The specific information transferred in this message is set in accordance with:
- the procedure specified in 5.6.10 of TS 36.331 [10] for E-UTRA *UEAssistanceInformation* message;
- the procedure specified in 5.10.2 of TS 36.331 [10] for E-UTRA *SidelinkUEInformation* message;
- the procedure specified in 5.5.5 of TS 36.331 [10] for E-UTRA *MeasurementReport* Message

### 5.7.x.2 Initiation

A UE in RRC_CONNECTED initiates the UL information transfer procedure whenever there is a need to transfer dedicated inter-RAT information as specified in TS 36.331 [10].

### 5.7.x.3 Actions related to transmission of ULInformationTransferIRAT message

The UE shall set the contents of the ULInformationTransferIRAT message as follows:
1> if there is a need to transfer dedicated LTE information related to V2X sidelink communications:
   2> set the ul-DCCH-MessageEUTRA to include the V2X sidelink communication information to be transferred (e.g. the E-UTRA RRC MeasurementReport message, the E-UTRA RRC SidelinkUEInformation message, the E-UTRA RRC UEAssistanceInformation message, or the E-UTRA RRCConnectionReconfigurationComplete);
1> submit the ULInformationTransferIRAT message to lower layers for transmission, upon which the procedure ends;

The related ASN.1 changes are as follows:

### - ULInformationTransferIRAT

The *ULInformationTransferIRAT* message is used for the uplink transfer of information terminated at NR MCG but specified by anoher RAT. In this version of the specification, the message is used for V2X sidelink communication information specified in TS 36.331 [10].
Signalling radio bearer: SRB1
RLC-SAP: AM
Logical channel: DCCH
Direction: UE to NR

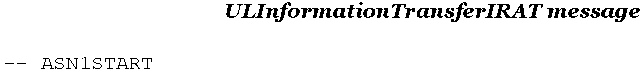

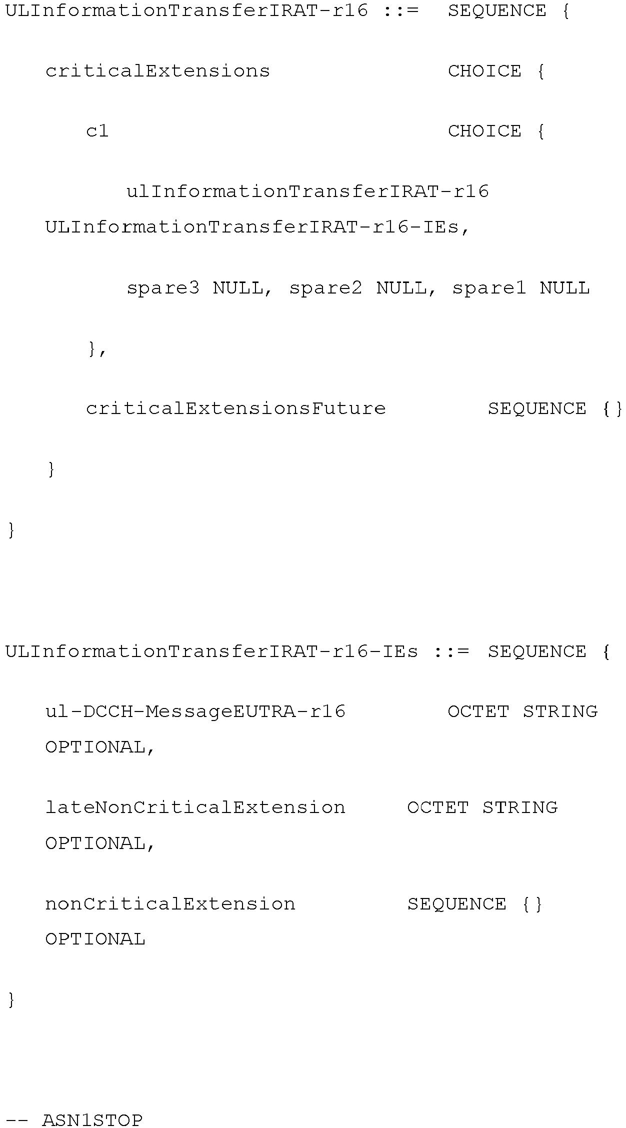

| ***ULInformationTransferIRAT* field descriptions** |
|---|
| ***ul-DCCH-MessageEUTRA*** |
| Includes the *UL-DCCH-Message* as defined in TS 38.331 [82]. In this version of the specification, the field is only used to transfer the LTE RRC *MeasurementReport,* LTE RRC *SidelinkUEInformation,* the LTE RRC *UEAssistanceInformation* messages, and the E-UTRA RRCConnectionReconfigurationComplete message. |

### 1.3 Embodiment 3: UE sends an indication within an NR RRC reconfiguration complete

### 5.3.5.3 Reception of an RRCReconfiguration by the UE

The UE shall perform the following actions upon reception of the *RRCReconfiguration,* or upon execution of the conditional configuration (CHO or CPC):
1> if the *RRCReconfiguration* is applied due to a conditional configurationexecution upon cell selection while timer T311 is running, as defined in 5.3.7.3:
   *<text omitted>*
1> set the content of the *RRCReconfigurationComplete* message as follows:
   *<text omitted>*
   2> if the *RRCReconfiguration* message includes the *sl-ConfigDedicatedEUTRA-Info:*
      3> if the UE is not able to comply with (part of) the configuration included in the RRCConnectionReconfiguration message, according to TS 36.331 [10], clause 5.4.2.4:
         4> set the value of *sl-ConfigDedicatedEUTRA-Complete* to *false;*
      3> else:
         4> set the value of *sl-ConfigDedicatedEUTRA-Complete* to *true*;
   2> if the UE has logged measurements available for NR and if the RPLMN is included in *plmn-IdentityList* stored in *VarLogMeasReport:*
      *<text omitted>*
   2> the procedure ends.
   NOTE 3: The UE is only required to acquire broadcasted *SIB1* if the UE can acquire it without disrupting unicast data reception, i.e. the broadcast and unicast beams are quasi co-located.

The corresponding ASN.1 changes are as follows:

### 6.2.2 Message definitions

### - RRCReconfigurationComplete

The *RRCReconfigurationComplete* message is used to confirm the successful completion of an RRC connection reconfiguration.
Signalling radio bearer: SRB1 or SRB3
RLC-SAP: AM
Logical channel: DCCH
Direction: UE to Network

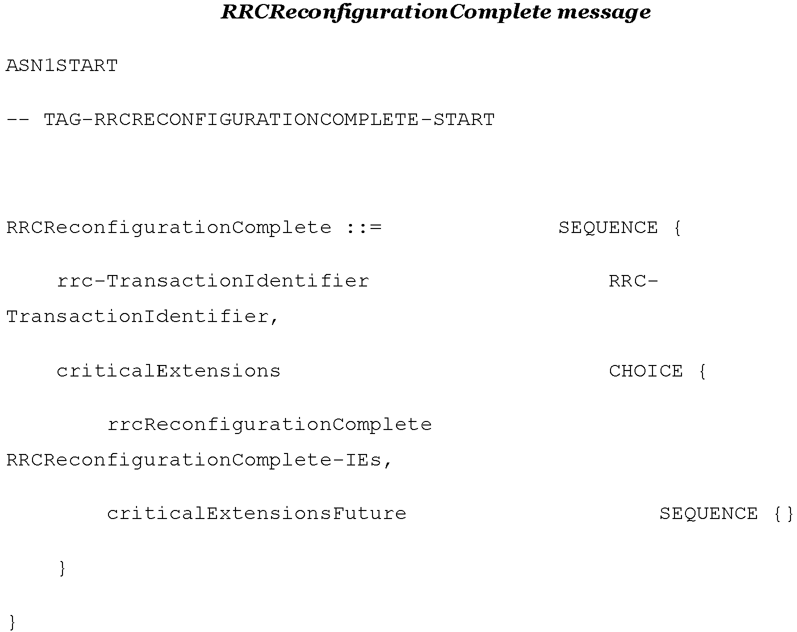

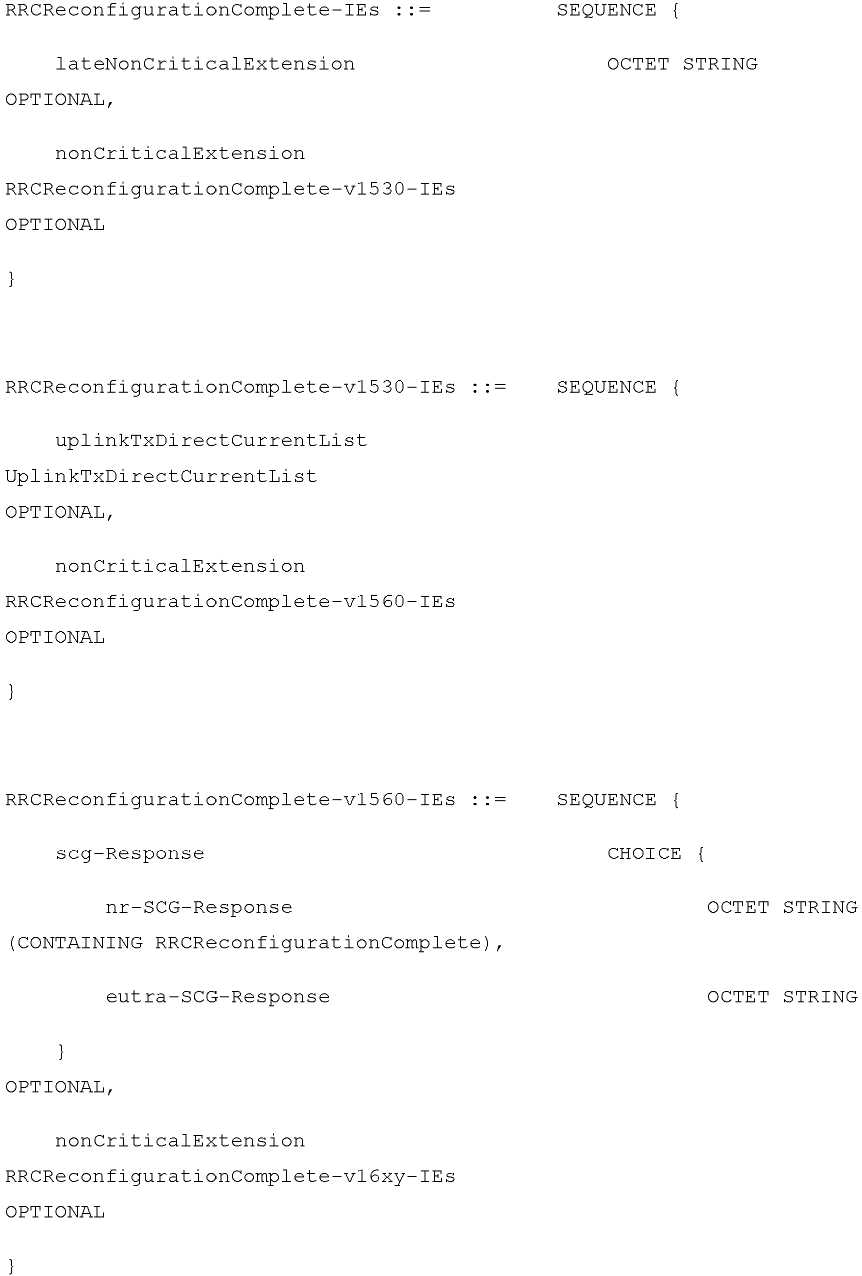

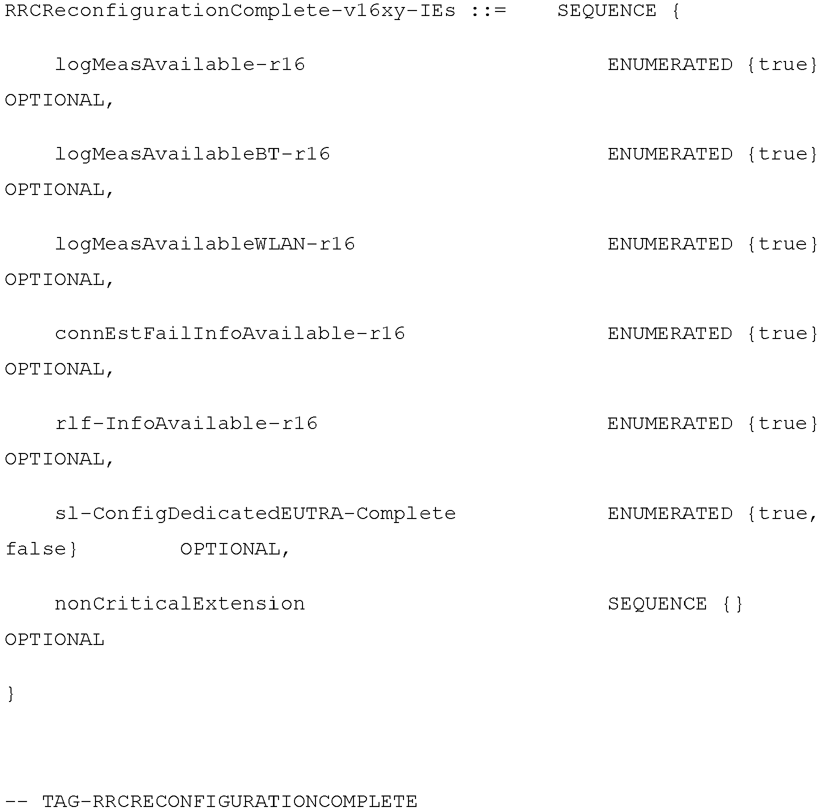

The following text sets out examples of how signalling support may be provided to enable a UE to report unsuccessful or failed implementation of an RRC configuration message, e.g., in crossRAT sidelink. The examples are shown as changes to TS 38.331. Those skilled in the art will appreciate that corresponding changes may be made to TS 36.331 for the case where an eNB wants to configure an NR V2X UE.

### 2.1 Alternative 1: inform the gNB by including an indication into a sidelink-related RRC message e.g., SidelinkUEInformation

### 5.3.5.3 Reception of an RRCReconfiguration by the UE

The UE shall perform the following actions upon reception of the *RRCReconfiguration,* or upon execution of the conditional configuration (CHO or CPC):
1> if the *RRCReconfiguration* is applied due to a conditional configurationexecution upon cell selection while timer T311 is running, as defined in 5.3.7.3:
   *<text omitted>*
1> set the content of the *RRCReconfigurationComplete* message as follows:
   *<text omitted>*
   2> if the *RRCReconfiguration* message includes the *sl-ConfigDedicatedEUTRA-Info:*
      3> if the UE is not able to comply with (part of) the configuration included in the E-UTRA RRCConnectionReconfiguration message received within the *sl-ConfigDedicatedEUTRA-Info,* according to TS 36.331 [10], clause 5.4.2.4:
         4> initiate transmission of the *SidelinkUEInformationNR* message to indicate the inability to comply with (part of) the configuration included in the E-UTRA RRCConnectionReconfiguration message received within the *sl-ConfigDedicatedEUTRA-Info*;
   2> if the UE has logged measurements available for NR and if the RPLMN is included in *plmn-IdentityList* stored in *VarLogMeasReport:*
      *<text omitted>*
   2> the procedure ends.
   NOTE 3: The UE is only required to acquire broadcasted *SIB1* if the UE can acquire it without disrupting unicast data reception, i.e. the broadcast and unicast beams are quasi co-located.

### 5.8.3.3 Actions related to transmission of SidelinkUEInformationNR message

The UE shall set the contents of the *SidelinkUEInformationNR* message as follows:
1> if the UE initiates the procedure to indicate it is (no more) interested to receive NR sidelink communication or to request (configuration/ release) of NR sidelink communication transmission resources (i.e. UE includes all concerned information, irrespective of what triggered the procedure):
   2> if *SIB12* including *sl-ConfigCommonNR* is provided by the PCell:
      3> if configured by upper layers to receive NR sidelink communication:
         4> include *sl-RxInterestedFreqList* and set it to the frequency for NR sidelink communication reception;
      3> if configured by upper layers to transmit NR sidelink communication:
         4> include *sl-TxResourceReqList* and set its fields (if needed) as follows for each destination for which it requests network to assign NR sidelink communication resource:
            5> set *sl-DestinationIdentiy* to the destination identity configured by upper layer for NR sidelink communication transmission;
            5> set *sl-CastType* to the cast type of the associated destination identity configured by the upper layer for the NR sidelink communication transmission;
            5> set *sl-RLC-ModeIndication* to include the RLC mode(s) and optionally QoS profile(s) of the sidelink QoS flow(s) of the associated RLC mode(s), if the associated bi-directional sidelink DRB has been established due to the configuration by *RRCReconfigurationSidelink;*
            5> set *sl-Failure* as *rlf* for the associated destination for the NR sidelink communication transmission, if the sidelink RLF is detected;
            5> set *sl-Failure as configFailure* for the associated destination for the NR sidelink communication transmission, if *RRCReconfigurationFailureSidelink* is received as sidelink RRC reconfiguration failure;
            5> set *sl-QoS-InfoList* to include QoS profile(s) of the sidelink QoS flow(s) of the associated destination configured by the upper layer for the NR sidelink communication transmission;
            5> set *sl-InterestedFreqList* to indicate the frequency for NR sidelink communication transmission;
            5> set *sl-TypeTxSyncList* to the current synchronization reference type used on the associated *sl-InterestedFreqList* for NR sidelink communication transmission.
1> if the UE initiated the procedure to indicate the inability to comply with (part of) the configuration included in the E-UTRA *RRCConnectionReconfiguration* message received within the *sl-ConfigDedicatedEUTRA-Info,* according to TS 36.331 [10], clause 5.4.2.4;
   *2> set sl-Failure as configFailureEUTRA;*
1> The UE shall submit the *SidelinkUEInformationNR* message to lower layers for transmission.

The corresponding ASN.1 changes are as follows:

### 6.2.2 Message definitions

### - SidelinkUEInformationNR

The *SidelinkUEinformationNR* message is used for the indication of NR sidelink UE information to the network.
Signalling radio bearer: SRB1
RLC-SAP: AM
Logical channel: DCCH
Direction: UE to Network

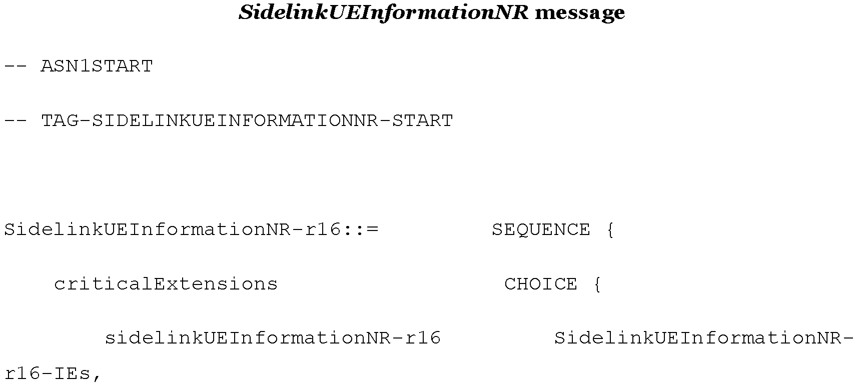

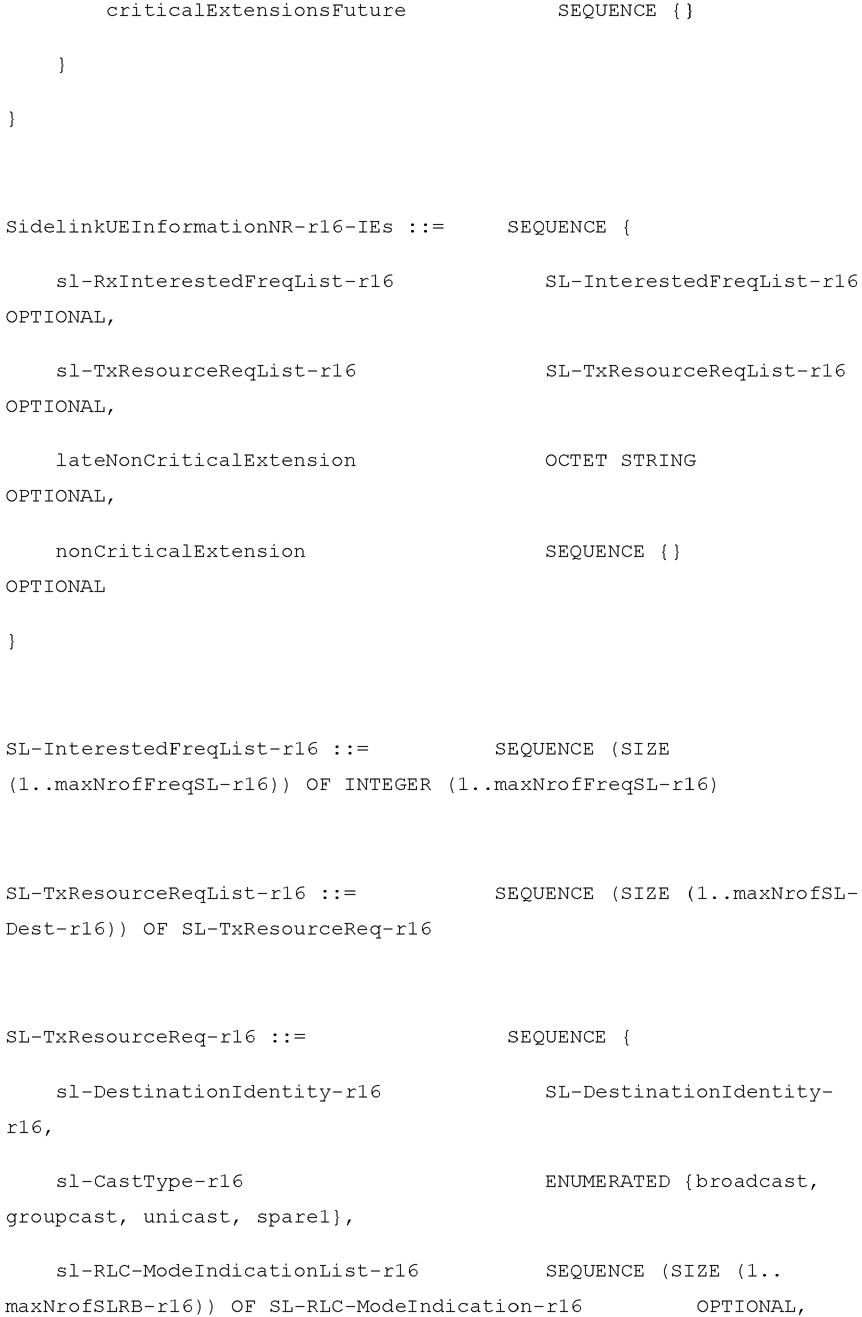

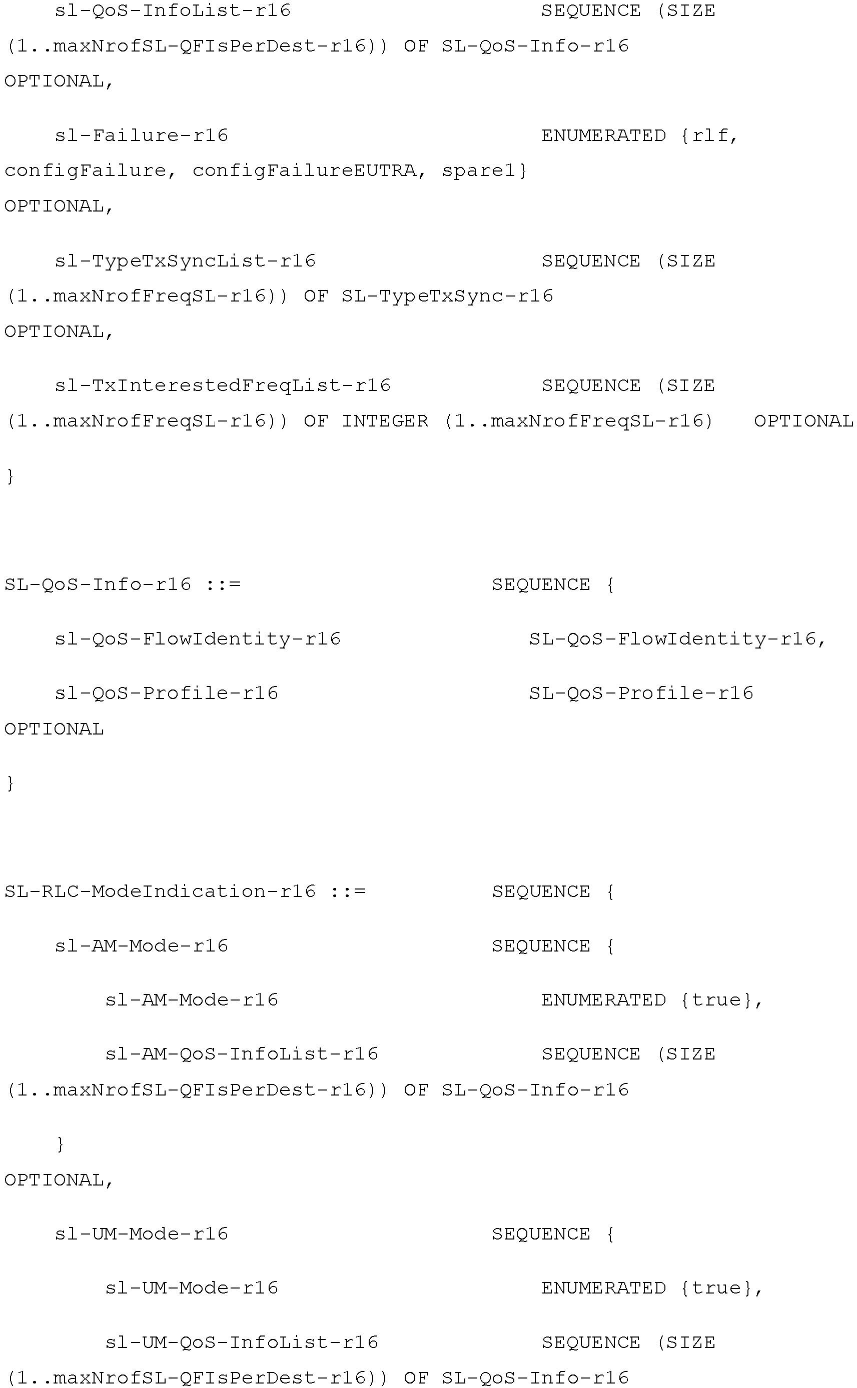

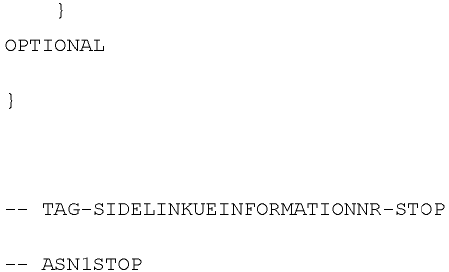

### 2.2 Alternative 2: inform the gNB by including an indication in a sidelink-related RRC message e.g., SidelinkUEInformation

### 5.3.5.3 Reception of an RRCReconfiguration by the UE

The UE shall perform the following actions upon reception of the *RRCReconfiguration,* or upon execution of the conditional configuration (CHO or CPC):
1> if the *RRCReconfiguration* is applied due to a conditional configurationexecution upon cell selection while timer T311 is running, as defined in 5.3.7.3:
   *<text omitted>*
1> set the content of the *RRCReconfigurationComplete* message as follows:
   *<text omitted>*
   2> if the *RRCReconfiguration* message includes the *sl-ConfigDedicatedEUTRA-Info:*
      3> if the UE is not able to comply with (part of) the configuration included in the E-UTRA RRCConnectionReconfiguration message received within the *sl-ConfigDedicatedEUTRA-Info,* according to TS 36.331 [10], clause 5.4.2.4:
         4> initiate the failure information procedure as specified in 5.7.5, to indicate the inability to comply with (part of) the configuration included in the E-UTRA RRCConnectionReconfiguration message received within the *sl-ConfigDedicatedEUTRA-Info*;
   2> if the UE has logged measurements available for NR and if the RPLMN is included in *plmn-IdentityList* stored in *VarLogMeasReport:*
      *<text omitted>*
   2> the procedure ends.
NOTE 3: The UE is only required to acquire broadcasted *SIB1* if the UE can acquire it without disrupting unicast data reception, i.e. the broadcast and unicast beams are quasi co-located.

### 5.7.5 Failure information

### 5.7.5.1 General

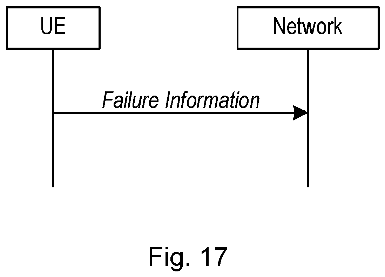

See Figure 17.

The purpose of this procedure is to inform the network about a failure detected by the UE.

### 5.7.5.2 Initiation

A UE initiates the procedure when there is a need inform the network about a failure detected by the UE. In particular, the UE initiates the procedure when the following condition is met:
1> upon detecting failure for an RLC bearer, in accordance with 5.3.10.3;
1> upon detecting DAPS handover failure, in accordance with 5.3.5.8.3;
1> upon inability to comply with (part of) the configuration included in the E-UTRA RRCConnectionReconfiguration message received within the sl-ConfigDedicatedEUTRA-Info, in accordance with 5.3.5.3;

Upon initiating the procedure, the UE shall:
1> initiate transmission of the *FailureInformation* message as specified in 5.7.5.3;

### 5.7.5.3 Actions related to transmission of FailureInformation message

The UE shall:
1> if initiated to provide RLC failure information, set *FailureInfoRLC-Bearer* as follows:
   2> set *logicalChannelIdentity* to the logical channel identity of the failing RLC bearer;
   2> set *cellGroupId* to the cell group identity of the failing RLC bearer;
   2> set the *failureType* as *rlc-failure*;
1> if initiated to provide DAPS failure information, set *FailureInfoDAPS* as follows:
   2> set the *failureType as daps-failure;*
1> if initiated to provide information on the inability to comply with (part of) the configuration included in the E-UTRA RRCConnectionReconfiguration message received within the sl-ConfigDedicatedEUTRA-Info, set FailureInfoSidelink as follows:
   2> set the failureType as configFailureEUTRA;
1> if used to inform the network about a failure for an MCG RLC bearer or DAPS failure information:
   2> submit the *FailureInformation* message to lower layers for transmission via SRB1;
1> else if used to inform the network about a failure for an SCG RLC bearer:
   2> if SRB3 is configured;
      3> submit the *FailureInformation* message to lower layers for transmission via SRB3;
   2> else;
      3> if the UE is in (NG)EN-DC:
         4> submit the *FailureInformation* message via E-UTRA embedded in E-UTRA RRC message *ULInformationTransferMRDC* as specified in TS 36.331 [10].
      3> else if the UE is in NR-DC:
         4> submit the *FailureInformation* message via SRB1 embedded in NR RRC message *ULInformationTransferMRDC* as specified in clause 5.7.2a.3.
1> else if used to inform the network about the inability to comply with (part of) the configuration included in the E-UTRA RRCConnectionReconfiguration message received within the sl-ConfigDedicatedEUTRA-Info:
   2> submit the FailureInformation message to lower layers for transmission via SRB1;

The corresponding ASN.1 changes are as follows:

### 6.2.2 Message definitions

### - FailureInformation

The *FailureInformation* message is used to inform the network about a failure detected by the UE.
Signalling radio bearer: SRB1 or SRB3
RLC-SAP: AM
Logical channel: DCCH
Direction: UE to network

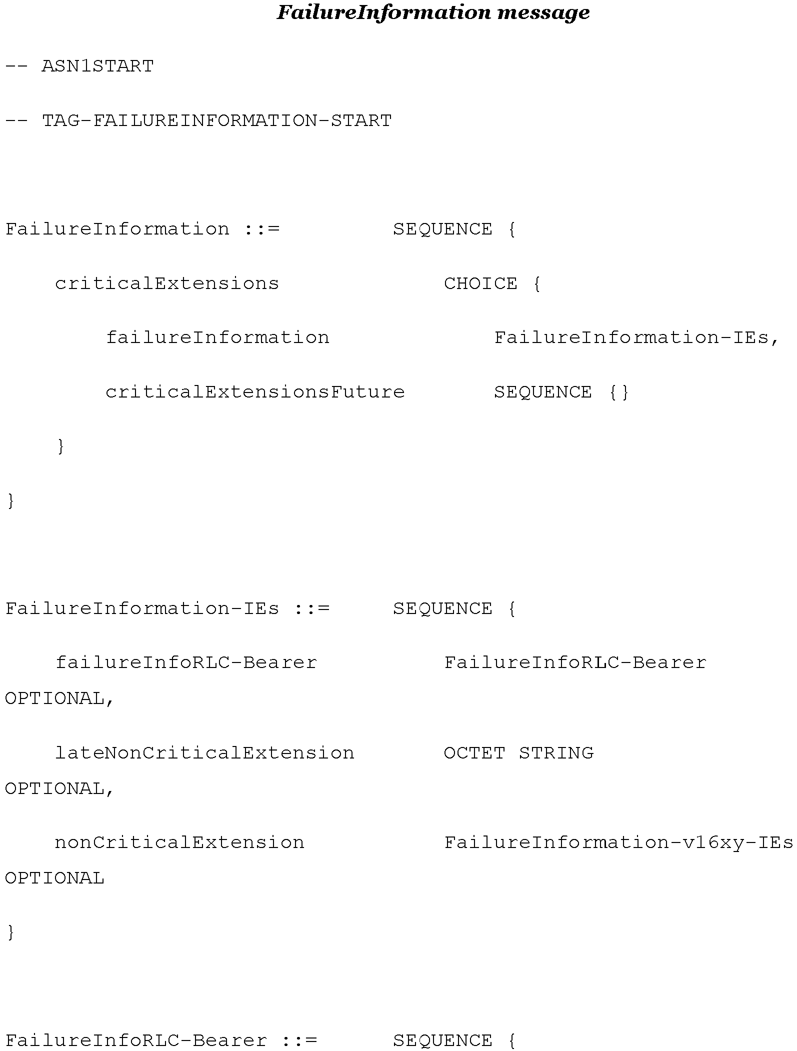

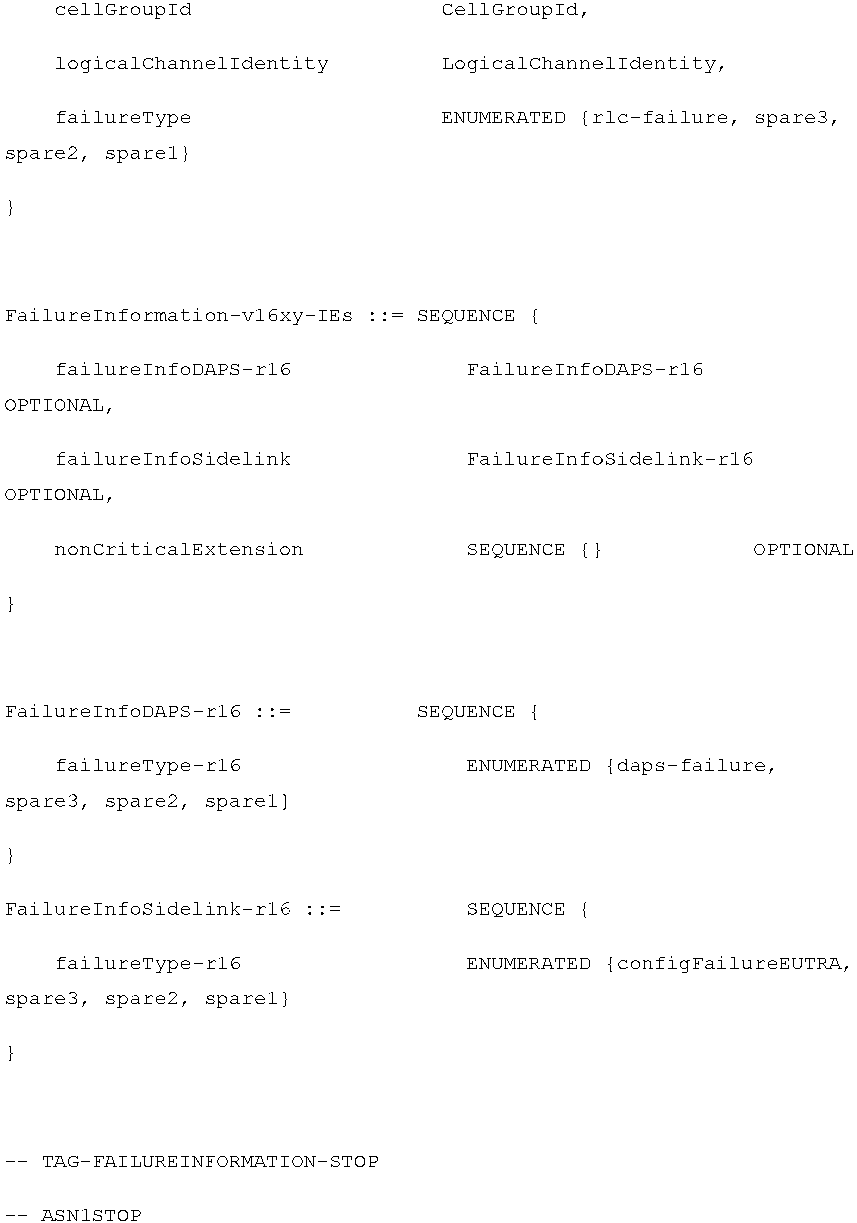

## Claims

1. A method performed by a terminal device (400, 710, 800), the terminal device having a first connection with a serving base station (760) using a first radio-access technology, and a second connection with one or more nodes using a second radio-access technology, , wherein the first radio-access technology is New Radio, NR, and the second radio-access technology is Long Term Evolution, LTE; or wherein the first radio-access technology is LTE and the second radio-access technology is NR, the method comprising:
- receiving (302), from the serving base station over the first connection, a connection configuration message, the connection configuration message comprising configuration information for the second connection; and
- responsive to unsuccessful implementation of the configuration information for the second connection, triggering (306) a failure procedure, wherein the failure procedure comprises transmitting, to the serving base station over the first connection, a second response message comprising an indication that implementation of the configuration information was unsuccessful.

2. The method according to claim 1, wherein the configuration information for the second connection is embedded within the received connection configuration message from the serving base station.

3. The method according to claim 1 or 2, wherein the indication that implementation of the configuration information was unsuccessful comprises an indication of a cause of the unsuccessful implementation of the configuration information.

4. The method according to any one of claims 1 to 3, wherein the failure procedure comprises releasing the second connection.

5. The method of any one of claims 1 to 4 wherein the second connection is a sidelink connection, and the one or more nodes are one or more other terminal devices.

6. The method according to claim 5, wherein the sidelink connection is a vehicle-to-anything, V2X, connection.

7. A method performed by a base station (600, 760), the base station having a first connection with a terminal device (710, 800) using a first radio-access technology, the terminal device having a second connection with one or more nodes using a second radio-access technology, , wherein the first radio-access technology is New Radio, NR, and the second radio-access technology is Long Term Evolution, LTE; or wherein the first radio-access technology is LTE and the second radio-access technology is NR, the method comprising:
- transmitting (502), to the terminal device over the first connection, a connection configuration message, the connection configuration message comprising configuration information for the second connection; and
- receiving (506) a second response message from the terminal device over the first connection, the second response message comprising an indication that the implementation of the configuration information was unsuccessful.

8. The method according to claim 7, wherein the configuration information for the second connection is embedded within the connection configuration message.

9. The method according to any one of claims 7 to 8, further comprising, responsive to receipt of the second response message, initiating a connection re-establishment procedure for the terminal device.

10. The method according to any one of claims 7 to 8, further comprising, responsive to receipt of the second response message, releasing radio resources for the terminal device on the first connection or releasing a stored context for the second connection of the terminal device.

11. The method of any one of claims 7 to 10, wherein the connection configuration message is configured according to the first radio-access technology, wherein the connection configuration message comprises a connection configuration sub-message configured according to the second radio-access technology, and wherein the connection configuration sub-message comprises the configuration information for the second connection.

12. The method of any one of claims 7 to 11, wherein the second connection is a sidelink connection and the one or more nodes are one or more other terminal devices.

13. A terminal device (400, 710, 800), the terminal device comprising:
- processing circuitry (720) configured to cause the terminal device to perform the method according to any of claims 1 to 6; and
- power supply circuitry (737) configured to supply power to the terminal device.

14. A base station (600, 760), the base station comprising:
- processing circuitry (770) configured to cause the base station to perform the method according to any of claims 7 to 12;
- power supply circuitry (787) configured to supply power to the base station.

## Patentansprüche

1. Verfahren, das von einer Endgerätevorrichtung (400, 710, 800) durchgeführt wird, wobei die Endgerätevorrichtung eine erste Verbindung mit einer bedienenden Basisstation (760) unter Verwendung einer ersten Funkzugangstechnologie und eine zweite Verbindung mit einem oder mehreren Knoten unter Verwendung einer zweiten Funkzugangstechnologie aufweist, wobei es sich bei der ersten Funkzugangstechnologie um New Radio, NR, handelt und bei der zweiten Funkzugangstechnologie um Long Term Evolution, LTE, handelt; oder wobei es sich bei der ersten Funkzugangstechnologie um LTE handelt und bei der zweiten Funkzugangstechnologie um NR handelt, wobei das Verfahren Folgendes umfasst:
- Empfangen (302) einer Verbindungskonfigurationsnachricht von der bedienenden Basisstation über die erste Verbindung, wobei die Verbindungskonfigurationsnachricht Konfigurationsinformationen für die zweite Verbindung umfasst; und
- in Reaktion auf eine erfolglose Implementierung der Konfigurationsinformationen für die zweite Verbindung Auslösen (306) einer Fehlerprozedur, wobei die Fehlerprozedur Senden einer zweiten Antwortnachricht über die erste Verbindung an die bedienende Basisstation umfasst, wobei eine zweite Antwortnachricht eine Angabe umfasst, dass die Implementierung der Konfigurationsinformationen erfolglos war.

2. Verfahren nach Anspruch 1, wobei die Konfigurationsinformationen für die zweite Verbindung in die empfangene Verbindungskonfigurationsnachricht von der bedienenden Basisstation eingebettet sind.

3. Verfahren nach Anspruch 1 oder 2, wobei die Angabe, dass die Implementierung der Konfigurationsinformationen erfolglos war, eine Angabe einer Ursache der erfolglosen Implementierung der Konfigurationsinformationen umfasst.

4. Verfahren nach einem der Ansprüche 1 bis 3, wobei die Fehlerprozedur Freigeben der zweiten Verbindung umfasst.

5. Verfahren nach einem der Ansprüche 1 bis 4, wobei es sich bei der zweiten Verbindung um eine Sidelink-Verbindung handelt und bei dem einen oder den mehreren Knoten um eine oder mehrere Endgerätevorrichtungen handelt.

6. Verfahren nach Anspruch 5, wobei es sich bei der Sidelink-Verbindung um eine Vehicle-to-Anything-Verbindung, V2X-Verbindung, handelt.

7. Verfahren, das von einer Basisstation (600, 760) durchgeführt wird, wobei die Basisstation eine erste Verbindung mit einer Endgerätevorrichtung (710, 800) unter Verwendung einer ersten Funkzugangstechnologie aufweist, wobei die Endgerätevorrichtung eine zweite Verbindung mit einem oder mehreren Knoten unter Verwendung einer zweiten Funkzugangstechnologie aufweist, wobei es sich bei der ersten Funkzugangstechnologie um New Radio, NR, handelt und bei der zweiten Funkzugangstechnologie um Long Term Evolution, LTE, handelt; oder wobei es sich bei der ersten Funkzugangstechnologie um LTE handelt und bei der zweiten Funkzugangstechnologie um NR handelt, wobei das Verfahren Folgendes umfasst:
- Senden (502) einer Verbindungskonfigurationsnachricht über die erste Verbindung an die Endgerätevorrichtung, wobei die Verbindungskonfigurationsnachricht Konfigurationsinformationen für die zweite Verbindung umfasst; und
- Empfangen (506) einer zweiten Antwortnachricht von der Endgerätevorrichtung über die erste Verbindung, wobei die zweite Antwortnachricht eine Angabe umfasst, dass die Implementierung der Konfigurationsinformationen erfolglos war.

8. Verfahren nach Anspruch 7, wobei die Konfigurationsinformationen für die zweite Verbindung in die Verbindungskonfigurationsnachricht eingebettet sind.

9. Verfahren nach einem der Ansprüche 7 bis 8, ferner umfassend Initiieren einer Verbindungswiederherstellungsprozedur für die Endgerätevorrichtung in Reaktion auf den Empfang der zweiten Antwortnachricht.

10. Verfahren nach einem der Ansprüche 7 bis 8, ferner umfassend Freigeben von Funkressourcen für die Endgerätevorrichtung auf der ersten Verbindung oder Freigeben eines gespeicherten Kontexts für die zweite Verbindung der Endgerätevorrichtung in Reaktion auf den Empfang der zweiten Antwortnachricht.

11. Verfahren nach einem der Ansprüche 7 bis 10, wobei die Verbindungskonfigurationsnachricht gemäß der ersten Funkzugangstechnologie konfiguriert ist, wobei die Verbindungskonfigurationsnachricht eine Verbindungskonfigurationsteilnachricht umfasst, die gemäß der zweiten Funkzugangstechnologie konfiguriert ist, und wobei die Verbindungskonfigurationsteilnachricht die Konfigurationsinformationen für die zweite Verbindung umfasst.

12. Verfahren nach einem der Ansprüche 7 bis 11, wobei es sich bei der zweiten Verbindung um eine Sidelink-Verbindung handelt und bei dem einen oder den mehreren Knoten um eine oder mehrere Endgerätevorrichtungen handelt.

13. Endgerätevorrichtung (400, 710, 800), wobei die Endgerätevorrichtung Folgendes umfasst:
- Verarbeitungsschaltungsanordnung (720), die dazu konfiguriert ist, die drahtlose Vorrichtung zum Durchführen des Verfahrens nach einem der Ansprüche 1 bis 6 zu veranlassen; und
- Leistungsversorgungsschaltungsanordnung (737), die zum Versorgen der drahtlosen Vorrichtung mit Leistung konfiguriert ist.

14. Basisstation (600, 760), wobei die Basisstation Folgendes umfasst:
- Verarbeitungsschaltungsanordnung (770), die dazu konfiguriert, die Basisstation zum Durchführen des Verfahrens nach einem der Ansprüche 7 bis 12 zu veranlassen;
- Leistungsversorgungsschaltungsanordnung (787), die dazu konfiguriert ist, die Basisstation mit Leistung zu versorgen.

## Revendications

1. Procédé réalisé par un dispositif terminal (400, 710, 800), le dispositif terminal présentant une première connexion avec une station de base de desserte (760) à l'aide d'une première technologie d'accès radio, et une deuxième connexion avec un ou plusieurs nœuds à l'aide d'une deuxième technologie d'accès radio, dans lequel la première technologie d'accès radio est New Radio, NR, et la deuxième technologie d'accès radio est Long Term Evolution, LTE ; ou dans lequel la première technologie d'accès radio est LTE et la deuxième technologie d'accès radio est NR, le procédé comprenant :
- la réception (302), depuis la station de base de desserte sur la première connexion, d'un message de configuration de connexion, le message de configuration de connexion comprenant des informations de configuration pour la deuxième connexion ; et
- en réponse à un échec de mise en œuvre des informations de configuration pour la deuxième connexion, le déclenchement (306) d'une procédure d'échec, dans lequel la procédure d'échec comprend la transmission, à la station de base de desserte sur la première connexion, d'un deuxième message de réponse comprenant une indication qu'une mise en œuvre des informations de configuration a échoué.

2. Procédé selon la revendication 1, dans lequel les informations de configuration pour la deuxième connexion sont intégrées dans le message de configuration de connexion reçu depuis la station de base de desserte.

3. Procédé selon la revendication 1 ou 2, dans lequel l'indication de l'échec de mise en œuvre des informations de configuration comprend une indication d'une cause de l'échec de mise en œuvre des informations de configuration.

4. Procédé selon l'une quelconque des revendications 1 à 3, dans lequel la procédure d'échec comprend la libération de la deuxième connexion.

5. Procédé selon l'une quelconque des revendications 1 à 4, dans lequel la deuxième connexion est une connexion de liaison latérale, et les un ou plusieurs nœuds sont un ou plusieurs autres dispositifs terminaux.

6. Procédé selon la revendication 5, dans lequel la connexion de liaison latérale est une connexion de véhicule à tout, V2X.

7. Procédé réalisé par une station de base (600, 760), la station de base présentant une première connexion avec un dispositif terminal (710, 800) à l'aide d'une première technologie d'accès radio, le dispositif terminal présentant une deuxième connexion avec un ou plusieurs nœuds à l'aide d'une deuxième technologie d'accès radio, dans lequel la première technologie d'accès radio est New Radio, NR, et la deuxième technologie d'accès radio est Long Term Evolution, LTE ; ou dans lequel la première technologie d'accès radio est LTE et la deuxième technologie d'accès radio est NR, le procédé comprenant :
- la transmission (502), au dispositif terminal sur la première connexion, d'un message de configuration de connexion, le message de configuration de connexion comprenant des informations de configuration pour la deuxième connexion ; et
- la réception (506) d'un deuxième message de réponse depuis le dispositif terminal sur la première connexion, le deuxième message de réponse comprenant une indication que la mise en œuvre des informations de configuration a échoué.

8. Procédé selon la revendication 7, dans lequel les informations de configuration pour la deuxième connexion sont intégrées dans le message de configuration de connexion.

9. Procédé selon l'une quelconque des revendications 7 à 8, comprenant en outre, en réponse à la réception du deuxième message de réponse, l'initiation d'une procédure de rétablissement de connexion pour le dispositif terminal.

10. Procédé selon l'une quelconque des revendications 7 à 8, comprenant en outre, en réponse à la réception du deuxième message de réponse, la libération de ressources radio pour le dispositif terminal sur la première connexion ou la libération d'un contexte stocké pour la deuxième connexion du dispositif terminal.

11. Procédé selon l'une quelconque des revendications 7 à 10, dans lequel le message de configuration de connexion est configuré selon la première technologie d'accès radio, dans lequel le message de configuration de connexion comprend un sous-message de configuration de connexion configuré selon la deuxième technologie d'accès radio, et dans lequel le sous-message de configuration de connexion comprend les informations de configuration pour la deuxième connexion.

12. Procédé selon l'une quelconque des revendications 7 à 11, dans lequel la deuxième connexion est une connexion de liaison latérale, et les un ou plusieurs nœuds sont un ou plusieurs autres dispositifs terminaux.

13. Dispositif terminal (400, 710, 800), le dispositif terminal comprenant :
- une circuiterie de traitement (720) configurée pour amener le dispositif terminal à réaliser le procédé selon l'une quelconque des revendications 1 à 6 ; et
- une circuiterie d'alimentation en énergie (737) configurée pour alimenter le dispositif terminal en énergie.

14. Station de base (600, 760), la station de base comprenant :
- une circuiterie de traitement (770) configurée pour amener la station de base à réaliser le procédé selon l'une quelconque des revendications 7 à 12 ;
- une circuiterie d'alimentation en énergie (787) configurée pour alimenter la station de base en énergie.
